(19) Europäisches Patentamt
European Patent Office
Office européen des brevets

(11) **EP 1 959 414 B1**

(12) **EUROPEAN PATENT SPECIFICATION**

(45) Date of publication and mention
of the grant of the patent:
**10.11.2010 Bulletin 2010/45**

(51) Int Cl.:
***G08G 1/123*** *(2006.01)* ***G01C 21/34*** *(2006.01)*

(21) Application number: **07003157.0**

(22) Date of filing: **14.02.2007**

(54) **Method and apparatus for estimating a travel time of a travel route**

Verfahren und Vorrichtung zum Schätzen der Reisezeit einer Reiseroute

Procédé et appareil pour estimer le temps de parcours d'un itinéraire de voyage

(84) Designated Contracting States:
**DE FR GB**

(43) Date of publication of application:
**20.08.2008 Bulletin 2008/34**

(73) Proprietor: **Hitachi, Ltd.**
**Chiyoda-ku**
**Tokyo (JP)**

(72) Inventors:
• **Lin, Lan**
**06400 Cannes (FR)**

• **Lenardi, Massimiliano**
**06600 Antibes (FR)**

(74) Representative: **MERH-IP**
**Matias Erny Reichl Hoffmann**
**Paul-Heyse-Strasse 29**
**80336 München (DE)**

(56) References cited:
**WO-A-03/060429     WO-A-2004/021305**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method and an apparatus for estimating a travel time of a travel route. Such methods and apparatuses are used to provide travellers with travel time predictions for their intended route.

Nowadays, travel time estimation is mainly carried out by traffic operation centres. Sensors are installed at the road side or inside the vehicles to collect movement data. Data is sent to the traffic operation centre from vehicles or from roadside units via wireless networks (GSM, GPRS, WiMax, etc.) or wired networks. At the traffic operation centre, a special data treatment algorithm is implemented to evaluate the relevance of the data and to extract the characteristics of the traffic. Normally, a large amount of historical data stored at the traffic operation centre is analyzed to build up a mathematical prediction model. This model uses the current travel time from the sensors as inputs and predicts a travel time at a future moment. The result of the prediction can be diffused to the road users by broadcasting methods such as radio, variable message panels, etc. Today, there exist several systems that can realize travel time prediction using this approach. For the sensors embedded in vehicles, mostly GSM and GPRS are used as a communication technology. For the sensors in or on the road, inductive loops, cameras, radar, etc. are employed.

The described approach often entails high costs for the sensors as well as for the communication infrastructure. In environments such as rural roads, where communication infrastructure is not available or too expensive, travel time estimation is in general not available. A large amount of data needs to be sent to the operation centres in order to be validated and analyzed. In this way, precious wireless network resources in terms of communication bandwidth are wasted.

An example of a mathematical prediction model for travel time estimation is disclosed in the article "Short-Term Travel Time Prediction Using a Time-varying Coefficient Linear Model", by Xiaoyan Zhang and John A. Rice from the University of Berkeley, Elsevier Preprint, March 13, 2001. In the described system, necessary movement data is collected by using sensors at the roadside or by using probe cars. The data is sent to the traffic operation centre, where a time-varying coefficient linear model algorithm is applied. In this system, a large sum of work is needed for the traffic operation centre to evaluate the liability of the data. The results are relatively imprecise, because of the long distances between the sensors and the resulting lack of sufficient sensor data.

Another travel time estimation system is disclosed in EP 1 484 729 B1. In this travel time prediction system, roadside units are installed near the road. Vehicles passing by send their movement information to the roadside units via wireless communication. The data is stored at the roadside unit or is sent to a traffic operation centre, if the roadside units are equipped with a network connection. In the case that no network connection is present, the prediction model is installed at the roadside unit. A request is initiated by a passing-by vehicle that sends out a request message to the roadside unit, where the predicted travel time is calculated. The result is sent back to the vehicle also via wireless communication. In case the roadside units are connected to the traffic operation centre via a network, the prediction will be carried out by the centre. Once, the operation centre has estimated a travel time, the result is sent back to the requesting vehicles. In this system, roadside units are needed for the prediction. The production and installation of the roadside units causes high costs. The algorithm for the prediction must be calibrated and installed in advance. Regular maintenance of the roadside units as well as the algorithms is needled. Since the roadside units are fixed at the roadside, travel time prediction is only available at the road sections near a roadside unit.

WO 03/060429 A1 shows a method for determining a travel time for a travel leg for a vehicle traveling in a line of vehicles while following the same, wherein the method corresponds to the preamble of claim 1 and involves the steps: recording data pertaining to the course or travel completed by at least one vehicle travelling in the line of vehicles, whereby the data pertaining to the course of travel contains at least one driving time or data, from which the driving time can be determined, for a partial leg between two positions on the travel leg, and calculating, from the data pertaining to the course of travel, the travel time for a leg containing the partial leg.

Based on the above outlined prior art, it is an object of the present invention to provide a further method and a further apparatus for estimating a travel time of a travel road that reduces some of the above described problems.

This object is accomplished by a method, an apparatus, and a computer program product for estimating a travel time according to the independent claims. Further advantageous embodiments are specified by the dependent claims.

A method for estimating a travel time of a travel route comprises the steps of determining a travel route having a travel start point and a travel end point, subdividing the travel route into at least a first and a second section, each section having a section start point being represented by a position of a start vehicle travelling on said route and a section end point being represented by a position of an end vehicle travelling on said route, wherein the end vehicle of the first section is the start vehicle of the second section that follows after the first section, determining a position of the start vehicle and the end vehicle for each section, determining for each section a distance between the start vehicle and the end vehicle of each section based on the determined positions, determining for each section a value of a parameter relating to the start vehicle and/or the end vehicle, and estimating the travel time from the travel start point to the travel end point on the basis of the determined distances and parameter values for each section is provided.

The travel route is subdivided into sections, wherein each section is defined by a start vehicle and an end vehicle. For each section a distance between the two vehicles delimiting the section, i.e. the length of the section, may be determined. This distance may be e.g. divided by the velocity of the start vehicle or the end vehicle or a combination of the two velocities to estimate a required time to travel from the position of the start vehicle to the position of the end vehicle. Preferably, the accuracy of the estimated required time is further improved by incorporating historical data specifying how long other vehicles required for travelling the distance in the past. The travel time estimation may be done for all sections constituting the travel route, to estimate a travel time for the complete travel route.

This method has the advantage that the precision of the travel time estimation is high if the determined distances, i.e. the lengths of the sections, are small. The method exhibits particular advantages when it is carried out by use of vehicles comprising an apparatus being adopted to carry out the method.

The method according to one aspect of the invention comprises the step of estimating a travel time for a section (preferably by a section travel time estimation means) on the basis of the determined distance between the start vehicle and the end vehicle of the section and the value of a parameter relating to the start vehicle and/or the end vehicle of the section. Preferably, the travel time estimation means is arranged on the start vehicle or the end vehicle of the section.

This step has the advantage that the determined distance between the start vehicle and the end vehicle of the section and the parameter value are combined to determine an estimated travel time for the section. In this way, there is no need to propagate the data relating to the distance and the parameter value to other vehicles. Instead, these two data may be combined and preferably the estimated travel time for the section is transmitted to the start vehicle or the end vehicle of another section that follows after the section. In this way, the amount of data that is transmitted is reduced. According to an alternative aspect of the invention, the distance and the parameter value are propagated to other vehicles that gather the distances and parameter values for more than one section and determine a travel time for the more than one section.

The method comprises the step of combining a plurality of estimated travel times relating to a plurality of sections for determining an estimated travel time for a road segment of the route comprising the respective sections.

This means that estimated travel times relating to a plurality of sections that belong to a road segment are preferably forwarded from vehicle to vehicle until the last vehicle of the road segment is reached which combines the estimated travel times to estimate a travel time for travelling the road segment. This determined travel time for the road segment may be transmitted to the requesting vehicle that sent a request to estimate a travel time for the road segment.

Preferably, the method further comprises the steps of generating a request to estimate a travel time by a request generation means arranged on a requesting vehicle and sending the generated request from the requesting vehicle to the start vehicle of the first section.

This has the advantage that the requesting vehicle does not need to be the vehicle where the travel time estimation starts. This means that a driver driving the requesting vehicle can instruct the on-board apparatus for estimating a travel time to estimate a travel time for a travel route that starts at a position at which the requesting vehicle has not arrived yet.

Preferably, the step of determining a position of the start vehicle and the end vehicle for each section comprises the steps of determining a position of the start vehicle by a positioning means arranged on the start vehicle, and determining a position of the end vehicle by a positioning means arranged on the end vehicle.

In this case, since every vehicle that participates in the travel time estimation method possesses its own positioning means and positions itself no positioning sensors at the road side are needed. This reduces the costs because no sensors at the roadside need to be installed and maintained.

In a preferred embodiment, the method comprises the further step of transmitting position data specifying the determined position of the start vehicle from the start vehicle to the end vehicle and/or transmitting position data specifying the determined position of the end vehicle from the end vehicle to the start vehicle. In this case, the distance between the start vehicle and the end vehicle of a section is preferably determined by a distance determination means arranged on the vehicle which received the transmitted position data.

Due to the transmission of position data, at least one of the two vehicles delimiting a section is aware of the positions of both vehicles delimiting the section. Thus, this vehicle can calculate the distance between the two vehicles.

Preferably, the value of a parameter relating to the start vehicle and/or the end vehicle of a section is determined by a parameter value determination means arranged on the start vehicle or the end vehicle of the section. This value of a parameter may be, for example, the current velocity of the start vehicle or the end vehicle or a combination of both velocities. A vehicle may determine its own velocity by for example using speed sensors in the vehicle. It may transmit this determined velocity to the other vehicle of the section. Thus, the method may comprise the step of transmitting data specifying the determined value of a parameter from the start vehicle to the end vehicle of the section and/ or transmitting data specifying the determined value of a parameter from the end vehicle to the start vehicle of the section. However, also without this transmission one vehicle of a section may be able to determine the velocity of the other vehicle of the section because it may possess two positions of the other vehicle taken at different points in time.

According to an embodiment of the invention, the method may comprise the step of transmitting data depending on at least one determined distance and depending on at least one value of a parameter from vehicle to vehicle to a travel time estimation means which performs the travel time estimation.

Preferably, the value of a parameter relating to the start vehicle and/or the end vehicle of a section is depending on the velocity of the start vehicle and/or the end vehicle of said section. The value of a parameter relating to the start vehicle and/or the end vehicle of a section may depend on the travel time that the end vehicle required for travelling the distance between the start vehicle and the end vehicle.

In a preferred embodiment, the travel time is estimated depending on historical data comprising historical parameter values of a section. In this way, not only current parameter values like e.g. the velocity of the vehicles is used for the travel time estimation, but the reliability of the estimation is increased by taking e.g. into account how long other vehicles in the past needed to travel a section. Thus, the quality of the estimation may be improved by incorporating historical data into the estimation.

In a preferred embodiment, the method comprises the step of forwarding the request from the requesting vehicle to a vehicle that is located on the travel route within a predetermined distance to the travel start point. Preferably, on this vehicle that is located on the travel route within a predetermined distance to the travel start point the steps of determining whether said vehicle received a declaration declaring that the vehicle sending the declaration starts a prediction process, ignoring the request, if a declaration has been received, and determining that said vehicle is the start vehicle of the first section and broadcasting a declaration, if a declaration has not been received by said vehicle, are performed.

Thus, the request is forwarded to a vehicle that is near the travel start point. This vehicle may start the prediction process. However, it may happen that more than one vehicle is within a predetermined distance to the travel start point. In this case, it should be avoided that more than one vehicle starts the prediction process. For this purpose, a declaration is sent to the surrounding vehicles in order to prevent that more than one vehicle starts the prediction process.

Preferably, the method comprises the step of forwarding an estimated travel time to the requesting vehicle that may be located within a predetermined distance to a position being specified in the request to estimate said estimated travel time.

The described method according to the invention exhibits particular advantages when it is carried out by use of vehicles comprising an apparatus adopted to carry out the method proposed by the present invention. For this purpose, the invention may provide an on-board apparatus for estimating a travel time of a travel route. The apparatus may be adapted to be mounted on a vehicle and may further be adapted to communicate with at least one other vehicle travelling on said travel route. Preferably, the apparatus is configured to be a communication node in a Vehicular Ad-Hoc Network (VANET).

An on-board apparatus is provided which comprises travel route determination means for determining a travel route having a travel start point and a travel end point, request generation means for generating a request to receive data being dependent on distances between vehicles travelling on said route and/or being dependent on parameter values relating to said vehicles travelling on said route, request sending means for sending the generated request from the apparatus to another vehicle, data receiving means for receiving the requested data sent by another vehicle to said apparatus in response to the request, and travel time estimation means for estimating a travel time for travelling the travel route based on the received data.

This apparatus has the advantage that a travel time can be estimated without an external operation centre and without sensors mounted along the roadside by, for example, generating a request which is simply sent to a VANET. In response to the request, the apparatus receives data that allows the apparatus to estimate a travel time. Note that in the sense of this specification, the term request shall not be limited to the data that the requesting vehicle sends out to receive data. Instead, request comprises any data that is sent to another vehicle in order to cause that the apparatus mounted on the other vehicle cooperates in at least one respect to allow for the estimation of a travel time.

The apparatus comprises a section travel time estimation means for estimating a travel time for a section, the section relating to a part of the travel route being delimited by the two vehicles between which the distance determination means determines the distance, the estimation being carried out on the basis of said determined distance and the value of a parameter relating to at least one of said vehicles delimiting the section. Preferably, the apparatus comprises a section travel time estimation sending means for sending the estimated travel time for a section to another vehicle and/or a section travel time estimation receiving means for receiving an estimated travel time for a section from another vehicle. The apparatus may comprise a travel time combination means for combining a plurality of estimated travel times relating to a plurality of sections for determining an estimated travel time for a road segment of the route comprising the respective sections. The apparatus comprises a segment travel time estimation sending means for sending the determined travel time for the road segment to another vehicle.

In this way, a travel time is estimated for a section and a plurality of estimated section travel times may be combined to a segment travel time. This allows for the compression of the data that is sent from vehicle to vehicle. Thus, less communication bandwidth is needed.

According to an alternative aspect of the invention, the apparatus comprises a data transmission means for transmitting data depending on at least one determined distance and depending on at least one value of a parameter from vehicle to vehicle to a travel time estimation means which performs the travel time estimation. In this way, no processing of the data needs to be carried out on the vehicle where the data is determined. Furthermore, also vehicles forwarding the data need not process the data.

Preferably, the apparatus comprises a request receiving means for receiving said request. This allows the apparatus to be triggered by another apparatus to take part in a step that is executed to be able to estimate a travel time.

The apparatus comprises a positioning means for determining a position of the vehicle. Thus, the apparatus may position the vehicle on which it may be mounted. This has the advantage that no external sensors at the road side are needed to position the vehicle.

The apparatus comprises a position data receiving means for receiving position data specifying a position of another vehicle.

The apparatus comprises a distance determination means for determining a distance between said position of the vehicle determined by the positioning means and said position of the other vehicle received by the position data receiving means. In this way, the apparatus is enabled to determine a distance between two vehicles.

According to one aspect of the present invention, the apparatus comprises a parameter value determination means for determining a value of a parameter relating to the vehicle and/or the other vehicle.

According to another aspect of the present invention, the apparatus comprises a data generation means for generating data in dependence on the distance determined by the distance determination means and/or on the parameter value determined by the parameter value determination means. The data generation means allows to process data on the vehicle. In this way, e.g. less data may be needed to be transmitted to other vehicles.

The apparatus comprises a data sending means for sending the data generated by the data generation means from the apparatus to another vehicle.

Preferably, the apparatus comprises a positioning data sending means for sending position data specifying the position of the vehicle determined by the positioning means to another vehicle.

Preferably, the parameter value determination means comprises a velocity determination means for determining the velocity of the vehicle and/or the velocity of the other vehicle. Preferably, the parameter value determination means comprises a travel time determination means for determining a travel time that the vehicle or the other vehicle required for travelling the distance provided by the distance determination means. This allows, for example, to use the velocity of a vehicle and historical data to determine an estimated section travel time.

Preferably, the apparatus comprises a first data storage for storing historical data comprising historical parameter values, wherein the data generation means generates data on the basis of data depending on the stored historical data.

Preferably, the apparatus comprises a request forwarding means for forwarding the request from the requesting vehicle to a vehicle that is located on the travel route within a predetermined distance to the travel start point. Preferably, the apparatus comprises a proximity detection means for determining whether the vehicle is located within a predetermined distance to the travel start point based on position data provided by the positioning means and on travel start point data. Preferably, the apparatus comprises a declaration management means for determining whether the apparatus received a declaration declaring that the other vehicle sending the declaration starts a prediction process, ignoring the request, if a declaration has been received, and starting a prediction process and broadcasting a declaration, if a declaration has not been received.

This has the advantage that the apparatus is able to cooperate with other apparatuses in order to forward the request to a vehicle that is near the travel start point. By sending the declaration it is assured that only one vehicle starts the prediction process.

Preferably, the apparatus comprises a travel time announcement sending means for sending the estimated travel time to the requesting vehicle and/or a travel time announcement receiving means for receiving an estimated travel time from another vehicle. Preferably, the apparatus comprises a requesting vehicle finding means for finding the requesting vehicle based on position data being comprised in the request being sent by the requesting vehicle.

In addition, the invention comprises a vehicle comprising an on-board apparatus as described above.

Furthermore, the invention comprises a computer program product for estimating a travel time, the computer program product comprising a computer readable medium and a computer program recorded therein in form of a series of state elements corresponding to instructions which are adapted to be processed by a data processing means of a data processing apparatus such that the method according to the invention is performed or an apparatus according to the invention is formed on the data processing means.

The estimation of a travel time has significant advantages: From the travellers' view point, the travel time estimation can help the travellers to plan their journeys efficiently and to save time, since they can dynamically change their route according to the real time traffic situation. For example, they are enabled to avoid congestions on highways and urban road networks. Also for commercial travellers, providing the estimated travel time is an important and efficient traffic management tool. Commercial travellers such as goods or post delivery and taxi services are enabled to reduce transport costs by avoiding congested sections and increase the service quality of commercial delivery by delivering goods within required time windows. From the traffic management point of view, when some or most of the travellers organize their journey in a more efficient way, the load on the whole road network becomes smoother. Thus, a smaller number of congestions can be achieved and the global delay time of all travellers in the network decreases. The decrease of the delays helps to reduce the economic costs of the travellers as well as the environmental pollution.

Depending on the embodiment, the invention may have the following advantages: Since the apparatus has its own sensors and/or uses sensors of vehicles, no sensors at the road side are needed. Furthermore, the communication may take place from vehicle to vehicle. Thus, no communication infrastructure at the road side is needed. Therefore, no sensors and communication infrastructure needs to be purchased, installed at the road side and maintained. As a consequence, the costs for the travel time estimation system are lower.

Moreover, the system is everywhere available where there is a sufficient density of vehicles being equipped with the apparatus according to the invention. Due to the small distances between the vehicles taking part in the method according to the invention, the travel time estimation may be more accurate than travel time estimations according to the prior art. Since data being determined within the system may be combined by one or more vehicle, the amount of data may be reduced. In this way, less communication bandwidth is consumed. Since the method is carried out in a distributed manner, no traffic operation centre is needed and the overall system is much more flexible.

Since the travel time may be estimated based on very short term historical data according to the invention, the estimated travel time may much more accurately mirror the real current traffic situation in comparison to the estimated travel times determined by systems of the prior art. This is the case because in the centralized methods of the prior art in general estimated travel times are distributed that are based on the traffic situation from 5 to 10 minutes ago. Centralized methods do not provide more current data because it is time-consuming to gather the necessary data from the roadside sensors and to process the data. In the centralized methods of the prior art data from the sensors are in general gathered every 1 to 20 minutes.

Preferred embodiments and further details of the present invention will be discussed in the following with reference to the figures.

Fig. 1 shows a basic scenario in which the invention may be used.

Fig. 2 shows a flowchart of one embodiment of the updating procedure of tables containing position data.

Fig. 3 shows one example of a beaconing historical data table containing position data.

Fig. 4 shows a scenario illustrating one embodiment of the request and declaration process.

Fig. 5 shows a flowchart of one embodiment of the request and declaration process.

Fig. 6 illustrates the content of one embodiment of a request message.

Fig. 7 shows the content of one embodiment of a declaration message.

Fig. 8 illustrates a scenario in which one embodiment of the prediction process is carried out.

Fig. 9 shows the content of one embodiment of a prediction message.

Fig. 10 shows a flowchart of one embodiment of the prediction and travel time announcement process.

Fig. 11 shows the content of one embodiment of a travel time announcement message.

Fig. 12 shows one embodiment of an apparatus for estimating a travel time.

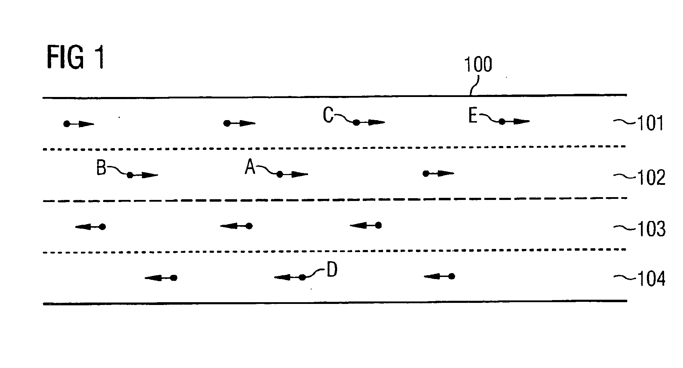

Next, with reference to Fig. 1, a basic scenario, in which the invention may be used, will be explained. Fig. 1 shows a road 100 with two lanes 101, 102 leading in a first direction and two lanes 103, 104 leading in the opposite direction. Vehicles travelling on this road are depicted as black points. The direction and length of the arrows that point away from the black points indicate the direction and velocity of the respective vehicle. In Fig. 1, there are five vehicles A, B, C, D, E, that are equipped with a vehicular-to-vehicular-communication system and a positioning system. Together these vehicles A, B, C, D, E build a vehicular ad-hoc network (VANET). Moreover, Vehicles A, B, C, D, and E are equipped with a navigation system that allows to determine one or more travel routes leading from the travel start point to the travel end point and that allows to determine whether a vehicle sending position data drives in the same traffic direction as the receiving vehicle.

A VANET is a self-organized mobile network among vehicles or among vehicles and roadside units. Based on VANETS, several applications may be provided. Well-known use cases are collision avoidance, exchange of traffic information among the vehicles and entertainment applications, wherein these services may be provided to the drivers and/or passengers during a journey. In a VANET, messages can be sent to their destinations located in specific geographical locations. The VANET is maintained in an autonomous and distributed way, so that new vehicles that enter the network and vehicles that leave the network will not impact the functionality of the VANET.

Based on the VANET, the vehicles A, B, C, E, execute the travel time estimation method according to the present invention.

Because the traffic situation can be very different between two opposite directions, vehicles in one direction should not contribute to the prediction of the travel time in the opposite direction. Thus, vehicle D does not participate in the travel time estimation method of the vehicles A, B, C, and E. Nevertheless, vehicle D can be used for the message forwarding, especially when the VANET is sparse. Thus, also vehicle D is part of the VANET, even though it does not participate in the travel time estimation method.

For the travel time estimation method, the periodical exchange of position data may be necessary. The position data is especially needed to calculate distances. In the following, the velocity of a vehicle i at time t is noted as $\overline{V}^t_i$. The position of a vehicle i at time t is noted as $P^t_i(X^t_i, Y^t_i, Z^t_i)$, where X is the longitude, Y is the latitude, and Z is the altitude of the vehicle. Based on the positions of two vehicles, the distance between two vehicles i and j at time t can be calculated as follows:

$$D^t_{ij} = \sqrt{(X^t_i - X^t_j)^2 + (Y^t_i - Y^t_j)^2 + (Z^t_i - Z^t_j)^2} \; .$$

For example, at time t, the distance between vehicle A and C can be calculated as:

$$D^t_{AC} = \sqrt{(X^t_A - X^t_C)^2 + (Y^t_A - Y^t_C)^2 + (Z^t_A - Z^t_C)^2} \; .$$

Each vehicle A, B, C, E that participates in the travel time estimation, is equipped with a positioning means. This positioning means allows the periodical detection of the geographic position of the vehicle. For a GPS system, the vehicle position is detected every one second. GPS systems are also able to detect the instant speed and moving direction of the vehicle. A highly precise, synchronized satellite time is provided by the GPS system. This time is used within the VANET for the synchronization of the vehicles' times and for time stamping. The future European satellite positioning system GALILEO provides even more precise positioning information to the vehicles while guaranteeing the compatibility. These or still other positioning systems may be used by the invention.

In VANETs, furthermore a beaconing function may be provided. The beaconing function allows vehicles to periodically (variable e.g. from every 0.1 seconds to several seconds) send out their position data to other vehicles that are within the communication range, which may be up to several hundred meters (normally 300 meters). If the GPS data is available only every 1 second, position data for every 0.1 seconds may be estimated using the vehicle's movement sensors. In the scenario shown in Fig. 1, the vehicles A, B, C, E are all in the communication range of each other. The beaconing messages that are exchanged among them, may comprise the identity of the vehicle, a time stamp, the velocity of the respective vehicle as well as the position of the vehicle.

According to one embodiment of the present invention, each vehicle keeps in its memory two tables, a self-historical data table and a beaconing historical data table. In the self-historical data table, the vehicle keeps its own historical position data. This means that the vehicle stores in this table every 1 second, where it is located. Moreover, the vehicle stores in the beaconing historical data table the received position data of other vehicles, from which it received beaconing messages. Having two tables for storing the own historical position data and for storing the position data of other vehicles has the advantage that the periodical interval can be different between the two tables. For example, it may be preferable to store the own GPS data every 1 second and to store the position data of the other vehicles more often or less often.

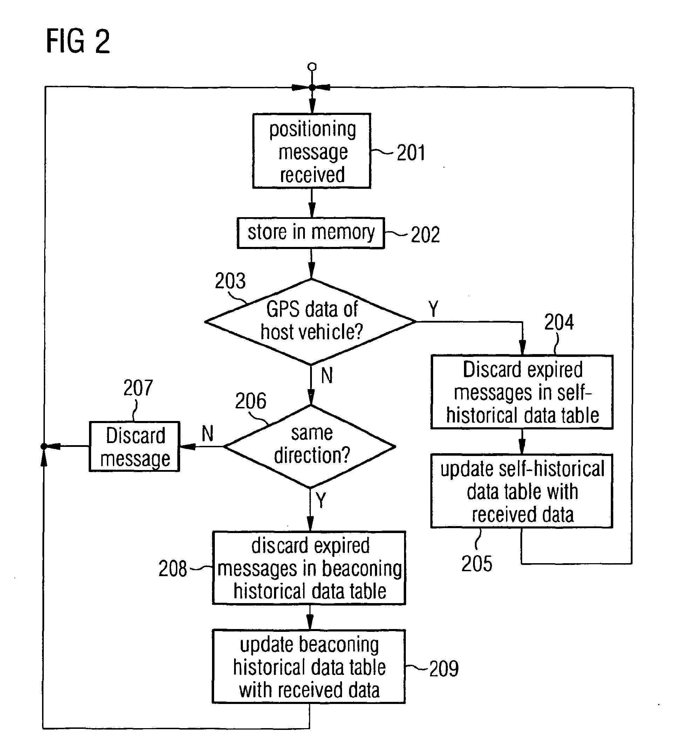

Fig. 2 shows a flowchart of one embodiment of a process for updating the beaconing historical data table and the self-historical data table. In step 201, the process waits for incoming positioning messages. These positioning messages may either be a GPS message from the positioning means of the host vehicle or it may be a beaconing message from another vehicle. When a position message has been received in step 201, it is stored in the memory in step 202. In step 203, it is verified whether the positioning message contains GPS data of the host vehicle, i. e. GPS data that was generated by the positioning means in the host vehicle. If the positioning message contains GPS data of the host vehicle, expired messages in the self-historical data table are discarded in step 204. In step 205, the self-historical data table is updated with the GPS data of the host vehicle that was contained in the received positioning message. After step 205, the process resumes at step 201.

In case the positioning message does not contain GPS data of the host vehicle, step 206 follows after step 203. In step 206, it is verified whether the positioning message was received from a vehicle that travels in the same direction as the host vehicle. As explained above, traffic information that refers to the road lane leading into the opposite direction in comparison to the direction of the host vehicle, should not be incorporated into the travel time estimation, because there may be possibly big differences of the traffic situation between the forward and the backward direction. If the vehicle that sent the positioning message does not travel in the same direction as the host vehicle, the positioning message is discarded in step 207 and the process resumes at step 201. However, if the vehicle that sent the positioning message travels in the same direction as the host vehicle, the process continues with step 208. In step 208, expired messages in the beaconing historical data table are discarded. In step 209, the beaconing historical data table is updated with the data that is comprised in the received positioning message. Afterwards, the process resumes at step 201.

The expiry times of data stored in the self-historical data table and of data stored in the beaconing-historical data table are chosen by the implementation engineer. The longer the expiry time is set, the more memory space is needed to store the data. However, on the other hand, the more historical data is present, the more the precision of the travel time prediction may be improved. Thus, a calibration work may be needed to choose the most appropriate value of the expiry time.

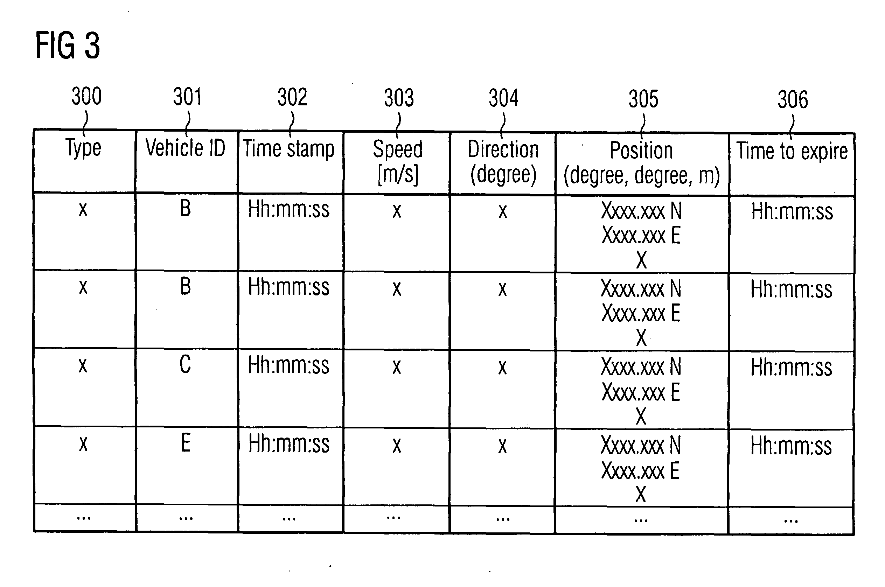

Fig. 3 shows one embodiment of a beaconing historical data table like it may be, for example, stored on vehicle A. Column 300 comprises the type of the table. For example, a beaconing historical data table may be identified with a 1 in this column, while a self-historical data table may be identified with a 0. Column 301 contains the vehicle ID. The vehicle ID is the identity of the vehicle that sent the GPS data. The vehicle ID may be, for example, specified using an alpha-numerical string, an IP address (Version 4 or Version 6), a serial worldwide production number, a MAC address, the position of the vehicle etc. The identity can be a permanent identity or a temporary identity allocated by the network. Column 302 contains a time stamp. The time stamp is the GPS time stamp when the position is measured, which is an UTC time. Column 303 comprises the speed of the sending vehicle, measured at the time of the time stamp. The unit is e.g. m/s. In column 304, the direction of the sending vehicle is stored. The direction is the moving direction of the vehicle at the time of the time stamp. The direction is expressed as degrees compared to the north direction. Column 305 comprises the position, which is the geographic position of the sending vehicle at the time of the time stamp. The position comprises a longitude, a latitude, and an altitude. The latitude is noted as Xxxx.xxx,N, for example, 1234.567,N (which means 12 degrees 34.567' to the north). The longitude is noted as Xxxx.xxx,E, for example, 1234.567,E (which means 12 degrees 34.567' to the east). The altitude is the measured altitude above the mean sea level, expressed in meters. Column 306 contains the time to expire. The time to expire is the time when the data is supposed to be expired. After this expiry time, the data is deleted from the table. For the self-historical data table, the structure may be the same.

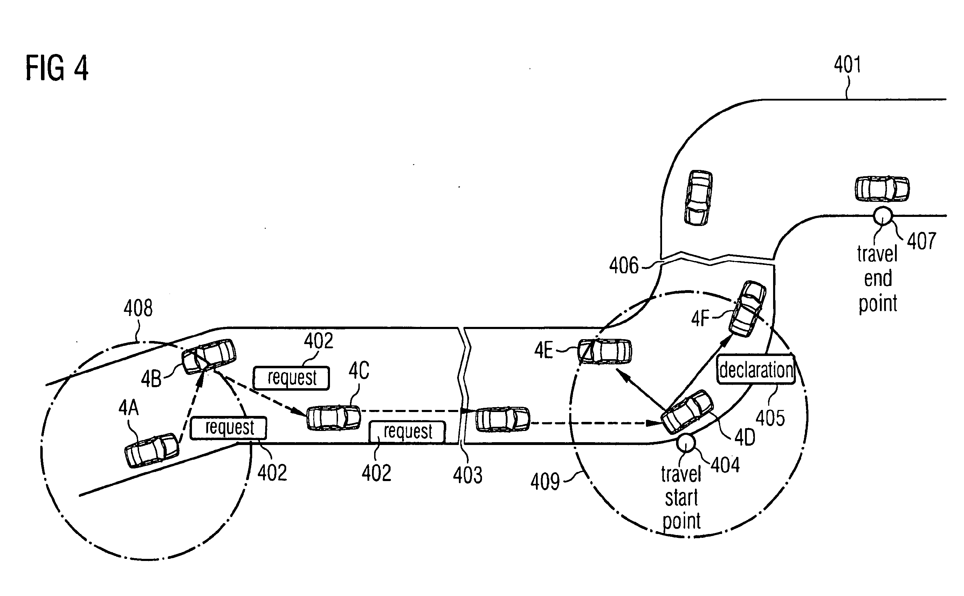

According to a first embodiment of the method for estimating a travel time of a travel route according to the invention, the method comprises four main processes: A request process, a declaration process, a prediction process, and a travel time announcing process. The request process and the declaration process of this first embodiment will now be explained with reference to Fig. 4.

Fig. 4 shows a road 401, on which several vehicles 4A, 4B, 4C, 4D, 4E, 4F are travelling. In the shown example, the driver of the vehicle 4A uses his navigation system, enters a travel start point and a travel end point and instructs the navigation system to find out which route will be the fastest. Vehicle 4A is equipped with a first embodiment of the on-board apparatus for estimating a travel time according to the present invention, like all the other vehicles shown in Fig. 4. The travel time estimation apparatus mounted on vehicle 4A uses its travel route determination means 1202 and its request message generation means 1203 to generate a request message 402 requesting to predict a travel time for travelling a travel route starting at the travel start point 404 and ending at the travel end point 407. It may happen that the travel route determination means 1202 finds more than one reasonable route between the travel start point 404 and the travel end point 407. In this case, the travel route determination means 1202 instructs the request message generation means 1203 either to incorporate more than one candidate route into the request message 402 or to send one request message 402 for each candidate route. Preferably, within the request message 402, the route is expressed as an ordered list of connected segments that are without intersections and collectively describe the complete route. Preferably, each segment is specified by its segment end point and a segment ID. The segment start point may be omitted, because it is the same point as the segment end point of the preceding segment.

The request message is sent by the travel time estimation apparatus into the VANET using the request sending means 1204. The request message 402 is then forwarded through the VANET downstream, until it arrives at a vehicle that is near the travel start point 404. Within the patent specification, the term "downstream" is defined as ahead of the host vehicle in a general forward driving direction, whereas the term "upstream" is defined as behind the host vehicle in a general forward driving direction. This means that looking from the host vehicle downstream are those parts of the road, that the host vehicle will still pass, whereas upstream are the parts of the road that the host vehicle already passed.

As can be seen from the scenario shown in Fig. 4, the requesting vehicle 4A sends a request message 402 to the vehicle 4B. The dashed circle illustrates the communication range of the vehicle 4A. Vehicle 4B is driving in the opposite traffic direction in comparison to the traffic direction of the vehicle 4A. The vehicle 4B should not participate in the travel time estimation, nevertheless it can participate in the process of forwarding the request message. Using also the vehicles driving in the opposite traffic direction allows a more efficient forwarding of the request message, when the VANET is sparse, which will likely be the case during the early market introduction phase of the system.

The request message is forwarded in the VANET preferably using a location-based routing function. A geo-anycast routing algorithm would be especially well suited for forwarding the request message. Any vehicle (for example, the first vehicle that receives the request message) in the communication range of the request start point may be the expected request message sending destination. The request message 402 is forwarded in the VANET using the location-based routing function towards the travel start point 404. Like it is illustrated in Fig. 4, vehicle 4B forwards the request message 402 to the vehicle 4C. Vehicle 4C forwards the request message 402 again. The zigzag-lines 403 illustrate that a part of the road is not shown in Fig. 4. The omitted part of the road may be of an arbitrary length, where the request message 402 is forwarded, until a vehicle 4D is reached that is within a predetermined distance to the travel start point 404.

The first vehicle that receives the request message 402, and that is within a predetermined distance to the travel start point 404, should start the travel time prediction process. However, it may be that several vehicles are within a predetermined distance to the travel start point 404. Thus, it needs to be avoided that more than one travel time estimation process is started. For this purpose, a declaration process is used. According to this declaration process, the first vehicle that receives the request message 402 and that is within a predetermined distance to the travel start point 404 sends out a declaration message 405. The declaration message 405 is broadcast to the nearby vehicles. With a declaration message, the sending vehicle states that it has already received the request message and will start the prediction process. The other vehicles that receive the declaration message 405 will not start a prediction process, because they know that another vehicle has already taken charge of the prediction process. Thus, the vehicles that receive a declaration message 405 and afterwards receive a request message 402 that corresponds to the declaration message 405, will simply discard the request message. In this way, it is assured that only one vehicle starts the prediction process. As a consequence, precious network resources are saved. In the scenario shown in Fig. 4, the vehicle 4D sends a declaration message 405 to the vehicles 4E and 4F.

Then, the vehicle 4D starts the prediction process by sending a prediction message 801 downstream. The prediction message may be forwarded downstream in the VANET, until the travel end point 407 is reached. The zigzag-lines 406 illustrate that there may be an arbitrary length between the travel start point 404 and the travel end point 407.

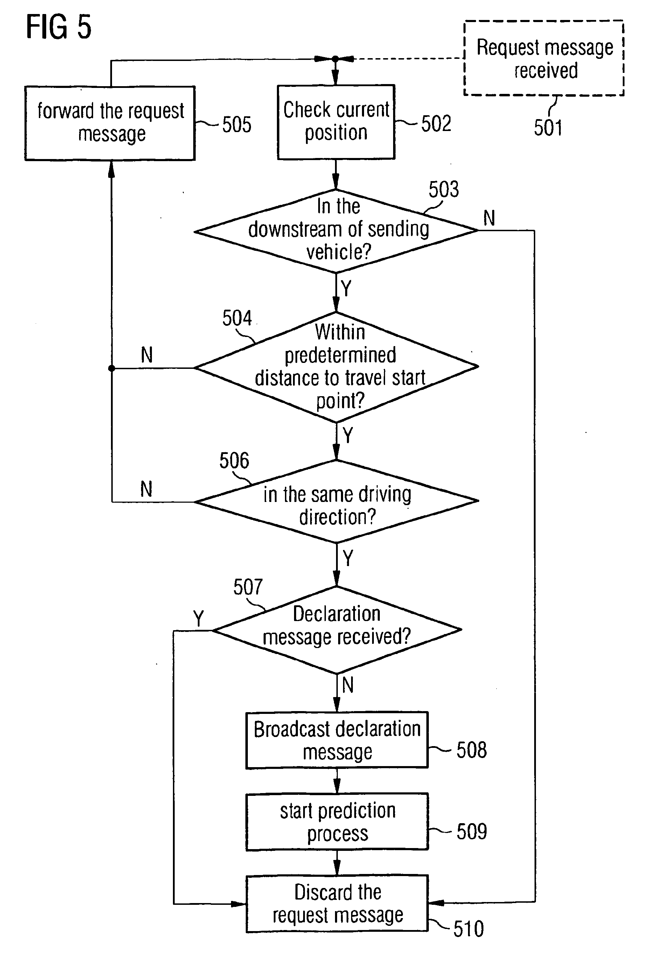

Fig. 5 illustrates a flowchart of one embodiment of the request and declaration process. When a vehicle receives a request message in step 501, it first checks its own position at the current time in step 502. Based on the position and the travelling direction of the sending vehicle and the position and travelling direction of the receiving vehicle, the receiving vehicle decides in step 503, whether the receiving vehicle is in the downstream of the sending vehicle. If it is in the upstream of the sending vehicle, there is no need to forward the request message and the receiving vehicle simply discards the request message in step 510. If the receiving vehicle is in the downstream of the sending vehicle, the receiving vehicle checks in step 504 whether it is located within a predetermined distance to the travel start point that is specified in the received request message. If it is not located within a predetermined distance to the travel start point, the receiving vehicle is somewhere in-between the requesting vehicle and the travel start point. Thus, the request message is simply forwarded in step 505. If the receiving vehicle is within a predetermined distance to the travel start point, the receiving vehicle checks whether it drives in the same direction as the requesting vehicle in step 506. If it does not drive in the same driving direction as the requesting vehicle, the receiving vehicle simply forwards the request message in step 505. However, if it drives in the same driving direction as the requesting vehicle, it checks in step 507, whether it has received a declaration message relating to the received request message. If it has already received a declaration message, it simply discards the request message in step 510. If it has not received a declaration message yet, it can take charge of starting the prediction process. It therefore broadcasts in step 508 a declaration message to the surrounding vehicles and starts the prediction process in step 509. Afterwards it discards the request message in step 510.

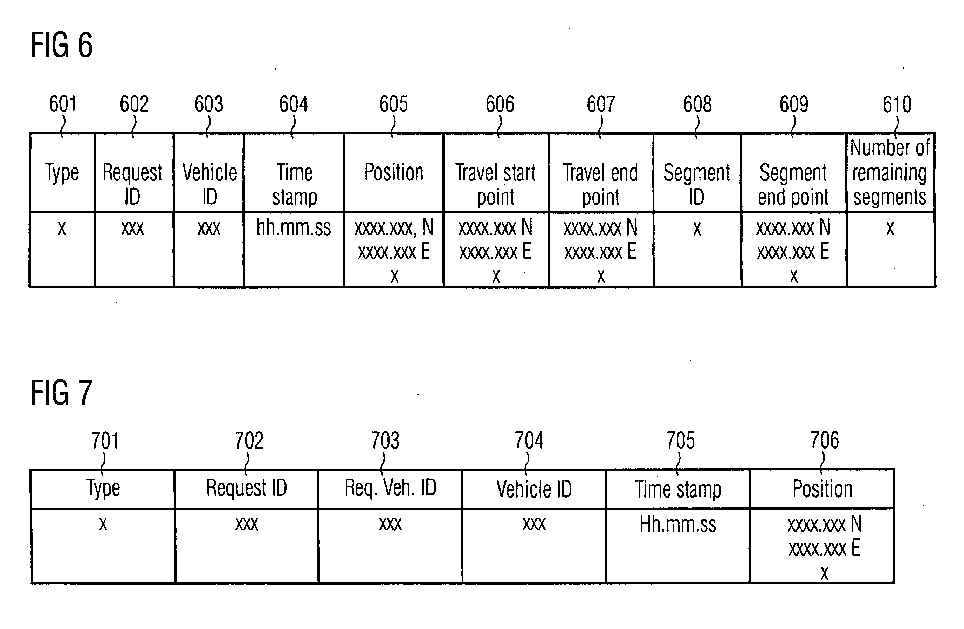

Fig. 6 illustrates the content of one embodiment of a request message. Column 601 of the request message contains a header indicating the type of the message. The request ID comprised in column 602 is the identity of the request message. The identity of the vehicle is comprised in column 603. The time stamp in column 604 specifies the time when the request was sent out by the requesting vehicle. The position specified in column 605 is the position of the requesting vehicle at the time of the time stamp. Column 606 comprises the travel start point and column 607 comprises the travel end point of the route for which the requesting vehicle requested to estimate a travel time. The route between the travel start point and the travel end point is specified using segments. Each segment is identified by a segment ID (column 608) and a segment end point (column 609). As mentioned above, for the same combination of a travel start point and a travel end point, different alternative routes may exist. For different routes, the request ID should be different. The segment points that describe the route can be preferably points where the traffic situation may change, such as intersections, beginning points of curves, etc. Preferably, the division of the route into segments is done by the navigation system of the requesting vehicle, based on its own digital map. By providing the position of the end point of the segment together with the segment ID an improved interoperability is achieved between vehicles being equipped with different types of navigation systems using different ways of coding the segment ID. Due to the position of the segment end point vehicles being equipped with different navigation systems may interoperate and participate in the travel time estimation process, even if they code the segment IDs differently.

It is possible to specify a request message that contains all segments of the route in one long message. In this case the segment IDs and the segment end points of the following segments would follow after column 609. Alternatively, it is also possible to break up the route into several separate short request messages carrying the same request ID, but requesting travel time prediction for different segments. Of course, these separated, short request messages should share the same values for the request ID, the vehicle ID, the travel start point and the travel end point. In this case, column 610 comprises the number of the remaining segments for which the receiving vehicles will probably still receive a short request message.

Fig. 7 illustrates one embodiment of a declaration message. The function of the declaration message is to avoid that several vehicles that are located within a predetermined distance to the travel start point, start the prediction process for the same request ID at the same time. In Fig. 4 for example, vehicle 4D starts the prediction process after having sent the declaration message 405 to the surrounding vehicles to avoid that also these vehicles start a prediction process.

The embodiment of the declaration message shown in Fig. 7 comprises in column 701 the type of the message to declare that this message is a declaration message. In column 702, the request ID, i. e. the identity of the received request message, is specified. Column 703 comprises the identity of the requesting vehicle. In column 704, the identity of the vehicle that sends the declaration message is specified. Columns 705 and 706 comprise the information, at what time the vehicle having the vehicle ID sends out the declaration message (705) and at which position the vehicle is located (706) when it sends out the declaration message. The declaration message is sent out in the VANET with a broadcast routing functionality.

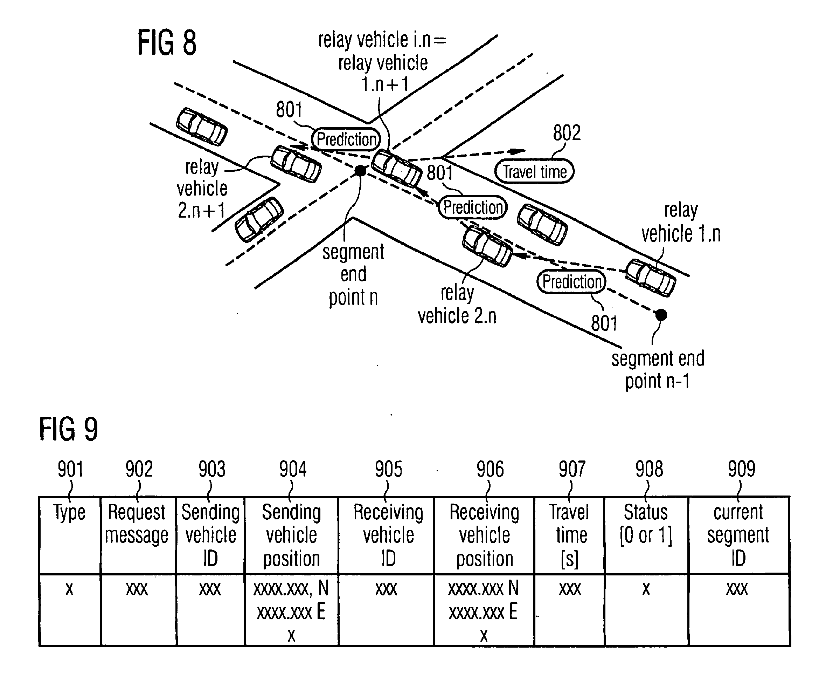

Fig. 8 illustrates one embodiment of the prediction and travel time announcement process. The prediction and travel time announcement process is illustrated for two segments: segment n and segment n+1. Fig. 8 shows two segment end points, segment end point n-1 and segment end point n. Segment n is the segment between segment end point n-1 and segment end point n. Segment n+1 follows after segment end point n. In the following, the vehicles that participate in the travel time prediction process are called relay vehicles. In the scenario shown in Fig. 8, all relay vehicles are driving in the same traffic direction.

The first relay vehicle in segment n is labelled as relay vehicle 1.n. This relay vehicle is near the segment end point n-1. If the relay vehicle 1.n were the first relay vehicle that starts the prediction process (vehicle 4D in Fig. 4), it would be labelled as vehicle 1.0. The relay vehicle 1.n starts the prediction process in segment n by sending out a prediction message 801 to the second relay vehicle in segment n, labelled as relay vehicle 2.n. Relay vehicle 2.n is in the downstream of relay vehicle 1.n. All the data of the request message is included in the prediction message. In this embodiment, relay vehicle 2.n calculates an estimated travel time between the position of relay vehicle 1.n and its own position. The result of the estimation is added to the prediction message, before the prediction message is sent to a third relay vehicle in segment n (not shown). The estimation calculation is then carried out between the relay vehicle 3.n and the relay vehicle 2.n. The result is added once again to the prediction message, before the prediction message is forwarded to a forth relay vehicle in segment n (relay vehicle 4.n, not shown). The same procedure continues until the prediction message is received by the last relay vehicle in the segment. This last relay vehicle sums up the estimation results of all preceding relay vehicles upstream. In this way, the total estimated travel time of the segment is obtained. Then, the last relay vehicle in the segment launches the travel time announcement process, i. e. it generates a travel time message 802 and sends the travel time message back to the requesting vehicle with the estimated travel time for the segment.

As shown in Fig. 8, the last vehicle of segment n is vehicle i.n. It calculates the total estimation result for the segment n. Afterwards, it sends this travel time estimation result of segment n in a travel time message 802 to the requesting vehicle. After sending out the result, the relay vehicle i.n checks, if there are any more segments in the downstream, for which a travel time needs to be estimated. For this purpose, at least a part of the information being comprised in the request message shown in Fig. 6 is comprised in the prediction message. By checking the remaining number of segments field 610, it can be found out if there are segments in the downstream for which a travel time should be estimated. If a further segment exists, the relay vehicle i.n. becomes the first relay vehicle of the following segment, i. e. it becomes the relay vehicle 1.n+1. In the role of the relay vehicle 1.n+1, it generates a new prediction message and sends this prediction message to the second relay vehicle, i. e. relay vehicle 2.n+1, in segment n+1. The prediction message is forwarded in segment n+1 according to the same principle as explained with reference to segment n. The overall prediction process continues until the very last relay vehicle, which is in a predetermined distance to the travel end point, is reached. This last relay vehicle also sends a travel time message 802 to the requesting vehicle and the prediction process ends.

Fig. 9 shows one embodiment of a prediction message 801. In the type field 901 it is specified that this message is a prediction message. All or at least a part of the information of the relating request message is inserted into field 902 of the prediction message, to allow the prediction to be carried out. Including a part of the relating request message may be sufficient when the request is sent in only one long message including all segments. In this case, only the segment for which the travel time is to be estimated and the segments in the downstream of this segment are needed. For the upstream segments the travel time estimation has already been carried out. Therefore, those parts of the request message relating to the segments for which a travel time has been already estimated may be discarded in the prediction message in order to shorten the message length and to save network bandwidth.

The identity of the sending vehicle and the current position of the sending vehicle, i.e. the identity and the current position of the relay vehicle that forwards or generates (in case of the first relay vehicle in a segment) the prediction message, are comprised in field 903 and 904. Field 905 and 906 comprise the identity and the current position of the receiving vehicle, i. e. the vehicle that is chosen by the sending vehicle as the next relay vehicle.

The sending vehicle chooses the receiving vehicle based on the data that is stored in the beaconing historical data table that was explained with reference to Fig. 2. As explained, all vehicles that are referred to in the beaconing historical data table, are those that are driving in the same direction as the requesting vehicle and that are or have been in the direct communication range of the sending vehicle. Among the relay vehicles that are referred to in the beaconing historical data table, the one is chosen that is farthest away from the sending relay vehicle according to the entry of the beaconing historical data table having a relatively young or preferably the youngest time stamp. The farthest vehicle is selected in order to increase the distance of the prediction and to decrease thereby the number of vehicle pairs that need to predict a travel time for a section in a segment. The reason why a relatively young or preferably the youngest time stamp is chosen, is to make sure that the vehicle is still in the direct communication range of the sending relay vehicle, when the prediction message is sent out. If the receiving relay vehicle were selected based on an entry having an older time stamp, it would be possible that this vehicle has already left the road segment for which a prediction is carried out or that it is not in the direct communication range of the sending relay vehicle anymore.

The travel time field 907 comprises the accumulated travel time of all pairs of relay vehicles that have already estimated a travel time for a section within the segment. The status field 908 indicates the status of the prediction. If the sending vehicle is the last relay vehicle in a segment, the status is 0. In this case, a travel time message 802 is generated and sent back to the requesting vehicle. The segment ID and the segment point information of this segment are discarded from the column 902. This information is not needed any more since the travel time estimation of this segment has been finished. At the same time, the number of the remaining segments in the column 902 is decreased by 1. If the sending vehicle is a relay vehicle in the middle of the segment, the status field 908 is set to 1. In this case, the prediction message 801 is further forwarded within the segment. Which value to insert into this status field 908 is decided by the sending vehicle based on the vehicle's current position and the data stored in the beaconing historical data table. When the sending vehicle compares its current position to the position of the next segment point, and the sending vehicle is in the communication range of the segment point and cannot find any other relay vehicle in its beaconing historical data table that is in the same segment, it is sure that it is the relay vehicle within the segment that is nearest to the segment point. In this case, the status flag is set to 0. If the sending vehicle is not in the communication range of the next segment point or there exists another possible relay vehicle that is possibly nearer to the segment point, the prediction message is forwarded. In this case, the status field 908 is set to 1. The current segment ID field 909 comprises the identity of the current segment for which a travel time is estimated.

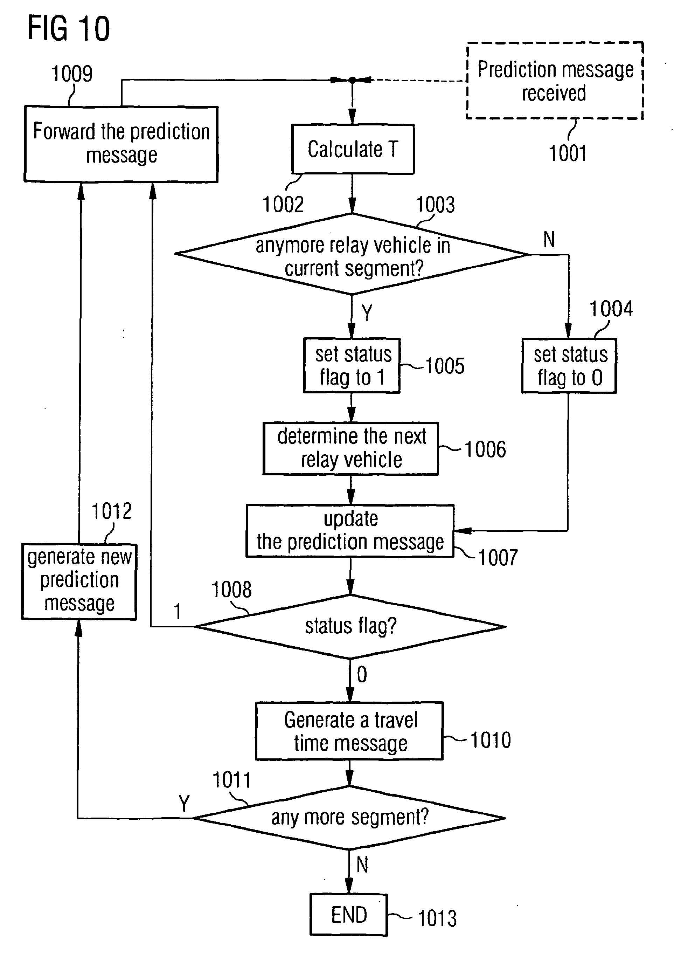

Fig. 10 shows a flowchart of one embodiment of a prediction and travel time announcement process. The prediction starts, when a prediction message is received or generated in step 1001. In step 1002, a predicted travel time T for the section between the sending vehicle and the receiving vehicle is calculated. In the case that the vehicle, on which the process shown in Fig. 10 is carried out, is the first relay vehicle in a segment, a new prediction message is generated and sent out. In this case, the travel time T is 0. After the calculation of the travel time T, the relay vehicle compares the position of the segment point as specified in the prediction message with its current position in step 1003. In this step it checks, if there is still another relay vehicle in the current segment that is nearer to the segment point. If this is not the case, the status is set to 0 in step 1004, and the prediction message is updated (e.g. in column 907) by adding the predicted travel time T to the result in step 1007. If there is still another relay vehicle in the current segment, the status field 908 is set to 1 in step 1005 and the next relay vehicle, i. e. the next receiving vehicle, is determined by checking the beaconing historical data table. Then, the prediction message is updated with the calculated travel time T (e.g. in column 907). After the updating of the prediction message, the value of the status is verified in step 1008. In case the status is 0, which means that the relay vehicle itself is near to the segment point and is the last relay vehicle in the segment, a travel time message is generated in step 1010, and the travel time message is sent back to the requesting vehicle. The current segment ID and segment point are deleted from the prediction message and the number of the remaining segments is decreased by 1. Then the vehicle checks in step 1011, based on the number of remaining segments field 610 comprised in column 902 of the prediction message, if there is still a segment in the downstream for which a travel time needs to be estimated. In this case, a new prediction message for the next segment is generated in step 1012 and is forwarded to the next relay vehicle in the next segment in step 1009. On the other hand, if it turns out in step 1008 that the value of the status flag is 1, it is determined that the relay vehicle itself is located in the middle of the current segment. In this case, it forwards the prediction message to the chosen next relay vehicle in step 1009. The whole process terminates in step 1013 when the last travel time message of the last segment is sent to the requesting vehicle by the last relay vehicle, being located in a predetermined distance to the travel end point.

In the following, it will be explained, how a travel time for one section is estimated according to one embodiment of the invention. For illustrational purposes, it is assumed that the travel time from a relay vehicle i-1 to another relay vehicle i at a certain time t is estimated, wherein this travel time estimation is initiated by sending a prediction message from the vehicle i-1 to the vehicle i. Vehicle i and vehicle i-1 are in a direct communication range of each other. The estimated travel time is labelled as $T_i^t$. In this embodiment, the calculation of the travel time estimation is realized by the vehicle in the downstream, i. e. vehicle i. However, the invention is not limited to this. In the present embodiment, a time-varying coefficient linear model (TVL model) is used for the travel time estimation. Two parameters are calculated: a current travel time parameter (labelled as T*) and a historical travel time parameter (labelled as T'). T* is the estimation of the travel time at the current time under the assumption that the vehicle is driving from the position of the vehicle i-1 to the position of the vehicle i with the same velocity as vehicle i-1. The time, at which this parameter is calculated, is the starting time of the departure from the position of the vehicle i-1. This is, for example, the time when the prediction message is sent. The current travel time is calculated as:

$$T *_i^t = \frac{D_{(i-1)i}^t}{v_{i-1}^t} = \frac{\sqrt{(X_{i-1}^t - X_i^t)^2 + (Y_{i-1}^t - Y_i^t)^2 + (Z_{i-1}^t - Z_i^t)^2}}{v_{i-1}^t}$$

As explained above with reference to the beaconing process and Fig. 2 and 3, vehicle i keeps in its beaconing historical data table the data of the vehicle i-1. Therefore, all the needed data can be found in the beaconing historical data table of vehicle i.

To improve the reliability of the estimated travel time, the current travel time may be combined with historical data according to a preferred embodiment of the invention. The historical data comprises information specifying how long other vehicles needed to travel from the current position of the relay vehicle i=1 to the current position of the relay vehicle i. The historical travel time is labelled as T'. It is obtained by calculating a weighted average value of all the available travel times taken by the vehicles that have already passed from the current position of vehicle i-1 to the current position of vehicle i. For example, vehicle i has already passed from the current position of vehicle i-1 to the current position of the vehicle i when the prediction message is received. Therefore, vehicle i checks in its self-historical data table, at which time stamp it was at the current position of vehicle i-1 (labelled as t'(i)). Based on this and the current time, the historical travel time of vehicle i travelling from the current position of vehicle i-1 to its current position can be calculated and is labelled as $T_i^{\prime t'(i)}$. Furthermore, vehicle i stores in its beaconing historical data table information of other vehicles (being labelled with the index j) that are in the downstream that have already passed from the current position of vehicle i-1 to the current position of vehicle i. Both the time stamp when these vehicles passed the current position of vehicle i-1 and the time stamp when the vehicles passed the current position of vehicle i can be found in the beaconing historical data table. With these data the historical travel times of those vehicles are calculated.

Since GPS data is only received every second, it may happen that the positions that can be found in the beaconing historical data table, do not exactly match the needed position of vehicle i-1 and vehicle i. To cope with this problem, it is possible to use extrapolation between two positions that have been measured. Furthermore, already in the beaconing process, the vehicles that send their positions may extrapolate positions between two positions that are measured by the positioning means by using data retrieved from vehicle sensors like a speed measuring means. Moreover, digital map data may be used to further increase the precision. Assuming that the total number of historical travel times is m (i.e: historical travel times of m other vehicles are comprised in the beaconing historical data table), a historical travel time data set is build up:

$$T_i^{\prime t} = \left\{ T_{j=1,i}^{\prime t'}, T_{j=2,i}^{\prime t'}, T_{j=3,i}^{\prime t'} ... T_{j=m,i}^{\prime t'} \right\}$$

A time-varying coefficient linear model (TVL model) is built up by combining the current travel time with historical data as shown in the following equation:

$$T_i^t = \alpha(t) + \beta(t)T*_i^t + \varepsilon$$

$\alpha$ and $\beta$ are the coefficients of the TVL model. $\alpha$ and $\beta$ are obtained by minimizing the following function:

$$F(\alpha,\beta) = \sum_1^m \left[ T''_i - \alpha(t) - \beta(t)\cdot T*_i^t \right]^2 \cdot w(t-t')$$

By minimizing F($\alpha$,$\beta$), $\alpha$ and $\beta$ can be obtained. w(t-t') is the weight function obtained by the probability function of the standard Gaussian distribution. The weight function is introduced to increase the influence of younger historical travel times and to decrease the influence of older historical travel times. This means that the more recent the historical travel time is, the more weight is given to T'.

The minimization is calculated as follows:

$$\frac{\partial F}{\partial \alpha} = \frac{\partial \sum_1^m [T'-\alpha-\beta\cdot T*]^2 \cdot w(t-t')}{\partial \alpha} = 2\sum_1^m [T'-\alpha-\beta\cdot T*]\cdot w(t-t') = 0$$

$$\frac{\partial F}{\partial \beta} = \frac{\partial \sum_1^m [T'-\alpha-\beta\cdot T*]^2 \cdot w(t-t')}{\partial \beta} = 2\sum_1^m [T'-\alpha-\beta\cdot T*]\cdot w(t-t')\cdot T* = 0$$

With these two equations, the value of $\alpha$ and $\beta$ can be calculated.

$\varepsilon$ is a constant correction parameter, which is determined in the test phase of the system.

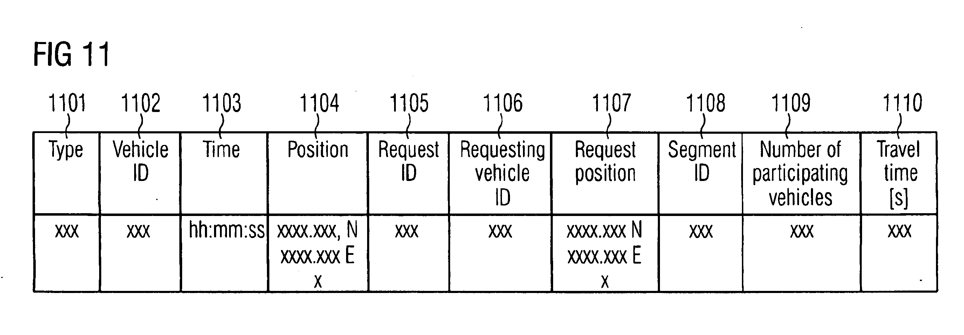

Fig. 11 shows one embodiment of a travel time announcement message. Column 1101 comprises the type and identifies the message as a travel time announcement message. Column 1102 comprises the identity of the sending vehicle. Column 1103 comprises the time at which the sending vehicle sends the travel time announcement message. Column 1104 comprises the position of the sending vehicle that is specified by the vehicle ID. The request ID of the original request is comprised in column 1105. The identity of the requesting vehicle is comprised in column 1106. Column 1107 comprises the position of the requesting vehicle when the requesting vehicle sent the request message. This position may help to find the requesting vehicle using a location-based routing protocol. The last three columns 1108 - 1110 comprise information about the predicted travel time. The travel time itself is comprised in column 1110. Column 1108 comprises the identity of the segment for which the travel time was predicted. Column 1109 comprises information about the number of vehicles that participated in predicting the travel time for the segment as specified by the segment ID.

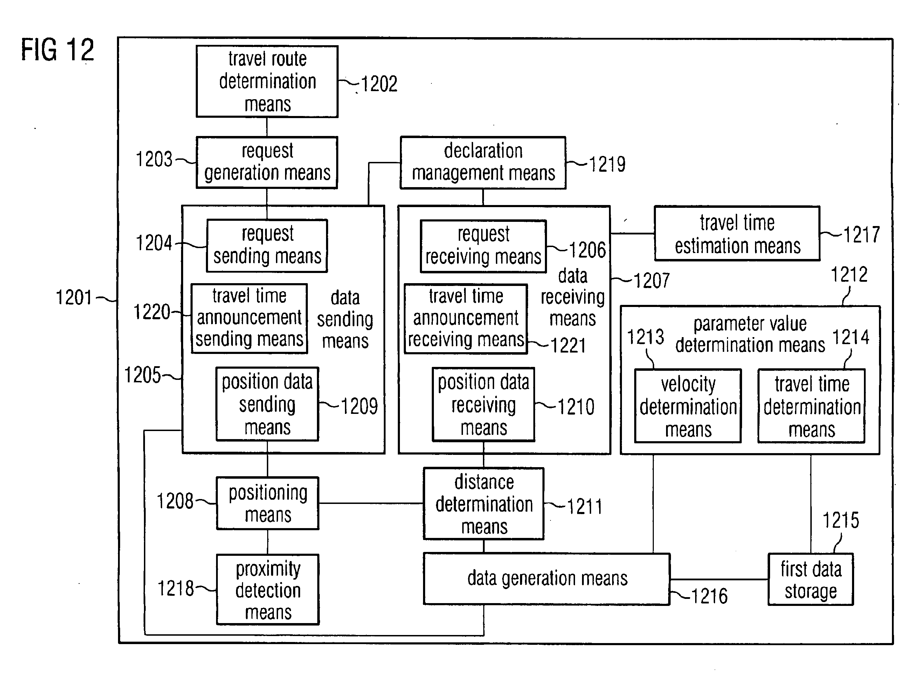

Fig. 12 shows one embodiment of an on-board apparatus for estimating a travel time of a travel route. The apparatus is adapted to be mounted on a vehicle. The apparatus 1201 comprises a travel route determination means 1202 for determining a travel route having a travel start point and a travel end point. Based on the determined travel route, a request generation means 1203 being comprised in the apparatus 1201 generates a request to receive data being dependent on distances between vehicles traveling on the determined travel route and/or being dependent on parameter values relating to said vehicles traveling on the route. The apparatus 1201 comprises a request sending means for sending the request being generated by the request generation means 1203 from the apparatus to another vehicle. The request sending means 1204 is comprised in a data sending means 1205.

Another vehicle receives the request using a request receiving means 1206 being comprised in the apparatus 1201. The request receiving means 1206 is comprised in a data receiving means 1207 that is comprised in the apparatus 1201. The vehicle that receives the request using the request receiving means verifies whether it is in the proximity of the travel start point, using the proximity detection means 1218 being comprised in the apparatus. If the receiving vehicle is not within a predetermined distance to the travel start point, is simply forwards the request to another vehicle using the request sending means 1204. If, however, the vehicle detects that it is within a predetermined distance to the travel start point, the declaration management means 1219 being comprised in the apparatus 1201 verifies whether the apparatus already received a declaration declaring that another vehicle sending the declaration starts the prediction process. If a declaration has already been received, the declaration management means ignores the request. However, if a declaration has not been received, yet, the declaration management means starts a prediction process and broadcasts a declaration using the data sending means 1205.

During the prediction process, the vehicle positions itself using the positioning means 1208 being comprised in the apparatus 1201. The determined position is sent to other vehicles using the position data sending means 1209 being comprised in the data sending means 1205. Position data that was sent out by other vehicles is received by the position data receiving means 1210 being comprised in the data receiving means 1207.

The apparatus 1201 further comprises a distance determination means 1211. The distance determination means determines a distance between the position that is determined by the positioning means 1208 and the position of another vehicle belonging to the section for which a distance is to be calculated. This position is received by the position data receiving means 1210.

The apparatus 1201 further comprises a parameter value determination means 1212 for determining a value of a parameter relating to the vehicle and/or the other vehicle of the section. The parameter value determination means 1212 comprises a velocity determination means 1213 for determining a velocity of the vehicle or the other vehicle of the section. Furthermore, the parameter value determination means 1212 comprises a travel time determination means 1214 for determining a travel time that the vehicle or the other vehicle of the section required for traveling the distance between the two vehicles as determined by the distance determination means 1211.

The apparatus 1201 further comprises a first data storage 1215. In this first data storage, parameter values determined by the parameter value determination means 1212 or other historical data, for example received by the data receiving means 1207, may be stored.

A data generation means 1216 being comprised in the apparatus 1201 generates data in dependence on the distance determined by the distance determination means 1211 and/or in dependence on the parameter value determined by the parameter value determination means 1212. Furthermore, the data generation means 1216 may incorporate data being stored in the first data storage 1215 into the generated data.

After the data has been generated by the data generation means 1216, the data is sent by the data sending means 1205 to another vehicle. Preferably, the data that is generated is an estimated travel time for the section. The generated data may be either sent to the requesting vehicle, or it may be sent to another vehicle that is preferably downstream of the current vehicle. The other vehicle receives the generated data together with the request to estimate the travel time for further sections using the request receiving means 1206. In this way, the further vehicle estimates a travel time for the following section. The data that is generated to estimate the further section may be forwarded with the already generated data to other vehicles. Somewhere in the chain, the estimated travel times may be combined to determine a travel time for the road segment of the route comprising the respective sections for which data has been generated.

The apparatus 1201 further comprises a travel time estimation means. This travel time estimation means 1217 receives data being dependent on distances between vehicles traveling on the route and/or being dependent on parameter values relating to the vehicles traveling on the route using the data receiving means 1207. Based on this data, the travel time estimation means 1217 estimates a travel time for traveling the travel route.

The apparatus 1201 further comprises a travel time announcement sending means 1220 (being comprised in the data sending means 1205) for sending an estimated travel time from the last relay vehicle of the segment to the requesting vehicle that has generated the request message using the request generation means 1203.

The apparatus 1201 further comprises a travel time announcement receiving means 1221 (being comprised in the data receiving means 1207) for receiving an estimated travel time from the last relay vehicle of a segment.

## Claims

1. Method for estimating a travel time of a travel route, comprising the steps of:

   - determining a travel route having a travel start point (404) and a travel end point (407), and
   - subdividing the travel route into a plurality of sections, each section having a section start point being represented by a position of a start vehicle of the section travelling on said route in a forward driving direction and a section end point being represented by a position of an end vehicle of the section travelling on said route in the forward driving direction, wherein the end vehicle of a first section is the start vehicle of a second section that follows after the first section in the forward driving direction,

the method further comprising for each of the plurality of sections the steps:

- determining a position (502) of the start vehicle of the section and a position of the end vehicle of the section,
- determining a distance between the start vehicle of the section and the end vehicle of the section based on the determined positions,
- determining a value of a parameter relating to the start vehicle of the section and/or the end vehicle of the section, and
- determining a section travel time of the section based on the determined distance and the determined value of the parameter,
**characterized by** the step of
- estimating the travel time of the travel.route at the end vehicle of the last section of the plurality of sections which has the travel end point as section end point, wherein the determined section travel time of a section and also the estimated section travel times of previous sections are sent to a vehicle of a section which follows after the section for which said section travel time was determined in the forward driving direction such that estimated travel times relating to the plurality of sections are forwarded from vehicle to vehicle until the end vehicle of the last section is reached so as to combine the estimated travel times to estimate the travel time of the travel route on the basis of the determined section travel times of the plurality of sections.

2. Method for estimating a travel time of a travel route, comprising the steps of

- determining a travel route having a travel start point (404) and a travel end point (407), and
- subdividing the travel route into a plurality of sections, each section having a section start point being represented by a position of a start vehicle of the section travelling on said route in a forward driving direction and a section end point being represented by a position of an end vehicle of the section travelling on said route in the forward driving direction, wherein the end vehicle of a first section is the start vehicle of a second section that follows after the first section in the forward driving direction,

the method further comprising for each of the plurality of sections the steps:

- determining a position (502) of the start vehicle of the section and a position of the end vehicle of the section,
- determining a distance between the start vehicle and the end vehicle of the section based on the determined positions, and
- determining a value of a parameter relating to the start vehicle and/or the end vehicle of the section,
**characterized by** the step of
- estimating the travel time of the travel route at the end vehicle of the last section of the plurality of sections which has the travel end point as section end point, wherein the determined distance of a section and the determined values of the parameter of a section and also the determined distances and determined values of the parameter of previous sections are sent to a vehicle of a section which follows after the section for which said distance and said value of said parameter were determined in the forward driving direction such that determined distances and determined values of the parameter relating to the plurality of sections are forwarded from vehicle to vehicle until the end vehicle of the last section is reached so as to estimate the travel time of the travel route on the basis of the determined distances and the determined values of the parameter of the plurality of sections.

3. Method according to claim 1 or 2, **characterized by** the steps of:

- generating a request to estimate a travel time by a request generation means arranged on a requesting vehicle, and
- sending the generated request from the requesting vehicle to the start vehicle of the section which has the travel start point as section start point.

4. Method according to claim 1, 2 or 3, **characterized in that** the step of determining a position (502) of the start vehicle of the section and the end vehicle of the section for each section comprises the steps of:

- determining a position (502) of the start vehicle of the section by a positioning means arranged on the start vehicle of the section, and

- determining a position (502) of the end vehicle of the section by a positioning means arranged on the end vehicle of the section.

5. Method according to claim 4, **characterized by** the further step of transmitting position data specifying the determined position of the start vehicle of the section from the start vehicle of the section to the end vehicle of the section and/or transmitting position data specifying the determined position of the end vehicle of the section from the end vehicle of the section to the start vehicle of the section.

6. Method according to claim 5, **characterized in that** the distance between the start vehicle of the section and the end vehicle of the section is determined by a distance determination means arranged on the vehicle of the section which received the transmitted position data.

7. Method according to at least one of the preceding claims, **characterized in that** the value of the parameter relating to the start vehicle of a section and/or the end vehicle of a section is determined by a parameter value determination means arranged on the start vehicle of the section or the end vehicle of the section.

8. Method according to claim 7, **characterized by** the step of transmitting data specifying the determined value of the parameter from the start vehicle of the section to the end vehicle of the section and/or transmitting data specifying the determined value of the parameter from the end vehicle of the section to the start vehicle of the section.

9. Method according to claim 1, **characterized in that** a travel time for a section (1002) is estimated by a section travel time estimation means being arranged on the start vehicle of the section or the end vehicle of the section.

10. Method according to claim 3 when depending on claim 1, **characterized by** the step of transmitting the estimated travel time (1010) to the requesting vehicle.

11. Method according to at least one of the preceding claims, **characterized in that** the value of the parameter relating to the start vehicle of a section and/or the end vehicle of a section is depending on the velocity of the start vehicle of said section and/or the end vehicle of said section.

12. Method according to at least one of claims 1 to 10, **characterized in that** the value of the parameter relating to the start vehicle of a section and/or the end vehicle of a section is depending on the travel time that the end vehicle of said section required for travelling the distance between the start-vehicle of said section and the end vehicle of said section.

13. Method according to at least one of the preceding claims, **characterized in that** the travel time is estimated depending on historical data comprising historical parameter values of a section,

14. Method according to claim 3 when depending on claim 1, **characterized by** the step of forwarding the request to estimate a travel time from the requesting vehicle (4A) to a vehicle (4D) that is located on the travel route within a predetermined distance to the travel start point.

15. Method according to claim 14, **characterized in that** on the vehicle that is located on the travel route within a predetermined distance to the travel start point the steps of

   - determining whether said vehicle has already received a declaration (507) declaring that the vehicle sending the declaration will start a time prediction process,
   - ignoring the request (510), if a declaration has been received, and
   - determining that said vehicle is the start vehicle of the first section and broadcasting a declaration (508), if a declaration has not been received by said vehicle, are performed.

16. On-board apparatus (1201) for estimating a travel time of a travel route, said apparatus being adapted to be mounted on a first vehicle and being further adapted to communicate with at least another vehicle travelling on said travel route, said apparatus comprising:

   - travel route determination means (1202) for determining a travel route having a travel start point (404) and a travel end point (407),
   - request generation means (1203) for generating a request to receive data being dependent on distances between vehicles travelling on said route and/or being dependent on parameter values relating to said vehicles travelling on said route,
- request sending means (1204) for sending the generated request from the apparatus to another vehicle,
- data receiving means (1207) for receiving the requested data sent by.another vehicle to said apparatus in response to the request,
- positioning means (1208) for determining a position of the first vehicle,
- position data receiving means (1210) for receiving position data specifying a position of another vehicle,
- distance determination means (1211) for determining a distance between said position of the first vehicle determined by the positioning means (1208) and said position of the other vehicle received by the position data receiving means (1210),
- parameter value determination means (1212) for determining a value of a parameter relating to the first vehicle and/or the other vehicle,
- data generation means (1216) for generating data in dependence on the distance determined by the distance determination means (1211) and/or on the parameter value determined by the parameter value determination means (1212), and
- travel time estimation means (1217) for estimating a travel time for travelling the travel route based on the received data,
and
- data sending means (1205) for sending the data generated by the data generation means (1216) from the apparatus to another vehicle,

**characterized in that**
said apparatus (1201) is adapted to estimate a travel time of the travel route according to a method according to at least one of claims 1 and 3 to 15, when said first vehicle to which said apparatus is mounted is the end vehicle of the last section of the plurality of sections which has the travel end point as section end point,
wherein said travel time estimation means (1217) is configured to estimate the travel time of the travel route on the basis of the determined section travel times of the plurality of sections into which said travel route is divided, the estimated section travel times of previous sections being received by the data receiving means (1207) from another vehicle, which is located in a direction opposite to the forward driving direction of the first vehicle, and being combined for estimating the travel time of the travel route on the basis of the determined section travel times of the plurality of sections.

17. On-board apparatus (1201) for estimating a travel time of a travel route, said apparatus being adapted to be mounted on a vehicle and being further adapted to communicate with at least another vehicle travelling on said travel route, said apparatus comprising:

- travel route determination means (1202) for determining a travel route having a travel start point (404) and a travel end point (407),
- request generation means (1203) for generating a request to receive data being dependent on distances between vehicles travelling on said route and/or being dependent on parameter values relating to said vehicles travelling on said route,
- request sending means (1204) for sending the generated request from the apparatus to another vehicle,
- data receiving means (1207) for receiving the requested data sent by another vehicle to said apparatus in response to the request,
- positioning means (1208) for determining a position of the first vehicle,
- position data receiving means (1210) for receiving position data specifying a position of another vehicle,
- distance determination means (1211) for determining a distance between said position of the first vehicle determined by the positioning means (1208) and said position of the other vehicle received by the position data receiving means (1210),
- parameter value determination means (1212) for determining a value of a parameter relating to the first vehicle and/or the other vehicle,
- data generation means (1216) for generating data in dependence on the distance determined by the distance determination means (1211) and/or on the parameter value determined by the parameter value determination means (1212), and
- travel time estimation means (1217) for estimating a travel time for travelling the travel route based on the received data,
and
- data sending means (1205) for sending the data generated by the data generation means (1216) from the apparatus to another vehicle,
**characterized in that**
said apparatus (1201) is adapted to estimate a travel time of the travel route according to a method according to at least one of claims 2 to 8, 11 to 13 and 15, when said first vehicle to which said apparatus is mounted is the end vehicle of the last section of the plurality of sections which has the travel end point as section end point, wherein said travel time estimation means (1217) is configured to estimate the travel time of the travel route on the basis of the determined distances and the determined values of the parameter of the plurality of sections into which said travel route is divided, the determined distances and the determined values of the parameter of previous sections being received by the data receiving means (1207) from another vehicle, which is located in a direction opposite to the forward driving direction of the first vehicle, and being combined for estimating the travel time of the travel route on the basis of the determined section travel times of the plurality of sections.

18. On-board apparatus according to claim 16 or 17, **characterized by** a request receiving means (1206) for receiving said request.

19. On-board apparatus according to claim 16, 17 or 18, **characterized by** a positioning data sending means (1209) for sending position data specifying the position of the first vehicle determined by the positioning means to another vehicle.

20. Vehicle comprising an on-board apparatus according to at least one of the claims 16 to 19.

21. A computer program product for estimating a travel time, the computer program product comprising a computer readable medium and a computer program recorded therein in form of a series of state elements corresponding to instructions which are adapted to be processed by a data processing means of a data processing apparatus such that a method according to at least one of the claims 1 to 15 is performed.

**Patentansprüche**

1. Verfahren zum Abschätzen einer Fahrzeit einer Fahrstrecke mit den Schritten:

   - Bestimmen einer Fahrstrecke mit einem Fahrtstartpunkt (404) und einem Fahrtendpunkt (407) und
   - Unterteilen der Fahrstrecke in eine Mehrzahl von Abschnitten, wobei jeder Abschnitt einen Abschnittsstartpunkt hat, der durch eine Position eines Startfahrzeugs des Abschnitts repräsentiert wird, das auf der Strecke in eine Vorwärtsfahrtrichtung fährt, und einen Abschnittsendpunkt, der durch eine Position eines Endfahrzeugs des Abschnitts repräsentiert wird, das auf der Strecke in Vorwärtsfahrtrichtung fährt, wobei das Endfahrzeug eines ersten Abschnitts das Startfahrzeug eines zweiten Abschnitts ist, das nach dem ersten Abschnitt in Vorwärtsfahrtrichtung folgt, wobei das Verfahren ferner für jede der Mehrzahl von Abschnitten die Schritte umfasst:
   - Bestimmen einer Position (502) des Startfahrzeugs des Abschnitts und einer Position des Endfahrzeugs des Abschnitts,
   - Bestimmen eines Abstands zwischen dem Startfahrzeug des Abschnitts und dem Endfahrzeug des Abschnitts basierend auf den ermittelten Positionen,
   - Bestimmen eines auf das Startfahrzeug des Abschnitts und/oder Endfahrzeug des Abschnitts bezogenen Werts eines Parameters und
   - Bestimmen einer auf den ermittelten Abstand und den ermittelten Wert eines Parameters bezogenen AbschnittsFahrzeit des Abschnitts, **gekennzeichnet durch** den Schritt:
   - Abschätzen der Fahrzeit der Fahrstrecke am Endfahrzeug des letzten Abschnitts der Mehrzahl von Abschnitten, der den Fahrtendpunkt als Abschnittsendpunkt hat, wobei die ermittelte Abschnittsfahrzeit eines Abschnitts und auch die abgeschätzten Abschnittsfahrzeiten vorangegangener Abschnitte an ein Fahrzeug eines Abschnitts gesendet werden, das auf den Abschnitt für die Abschnittsfahrzeit in Vorwärtsfahrtrichtung ermittelt wurde, folgt, so dass auf die Mehrzahl der Abschnitte bezogene abgeschätzte Fahrzeiten von Fahrzeug zu Fahrzeug weitergeleitet werden, bis das Endfahrzeug des letzten Abschnitts erreicht ist, um die abgeschätzten Fahrzeiten zu kombinieren, um die Fahrzeit der Fahrstrecke auf der Basis der ermittelten Abschnittsfahrzeiten der Mehrzahl von Abschnitten abzuschätzen.

2. Verfahren zum Abschätzen einer Fahrzeit einer Fahrstrecke mit den Schritten:

   - Bestimmen einer Fahrstrecke mit einem Fahrtstartpunkt (404) und einem Fahrtendpunkt (407) und

- Unterteilen der Fahrstrecke in eine Mehrzahl von Abschnitten, wobei jeder Abschnitt einen Abschnittsstartpunkt hat, der durch eine Position eines Startfahrzeugs des Abschnitts repräsentiert wird, das auf der Strecke in eine Vorwärtsfahrtrichtung fährt und einen Abschnittsendpunkt, der durch eine Position eines Endfahrzeugs des Abschnitts repräsentiert wird, das auf der Strecke in Vorwärtsfahrtrichtung fährt, wobei das Endfahrzeug eines ersten Abschnitts das Startfahrzeug eines zweiten Abschnitts ist, das nach dem ersten Abschnitt in Vorwärtsfahrtrichtung folgt, wobei das Verfahren ferner für jede der Mehrzahl von Abschnitten die Schritte umfasst:
- Bestimmen einer Position (502) des Startfahrzeugs des Abschnitts und einer Position des Endfahrzeugs des Abschnitts,
- Bestimmen eines Abstands zwischen dem Startfahrzeug und dem Endfahrzeug des Abschnitts basierend auf den ermittelten Positionen,
- Bestimmen eines auf das Startfahrzeug und/oder Endfahrzeug des Abschnitts bezogenen Werts eines Parameters,

durch den Schritt **gekennzeichnet**:

Abschätzen der Fahrzeit der Fahrstrecke am Endfahrzeug des letzten Abschnitts der Mehrzahl von Abschnitten, der den Fahrtendpunkt als Abschnittsendpunkt hat, wobei der ermittelte Abstand eines Abschnitts und die ermittelten Werte des Parameters eines Abschnitts und auch die ermittelten Abstände und ermittelten Werte des Parameters vorangegangener Abschnitte an ein Fahrzeug eines Abschnitts gesendet werden, das auf den Abschnitt, für den der Abstand und der Wert des Parameters in der Vorwärtsfahrtrichtung ermittelt wurden, folgt, so dass auf die Mehrzahl der Abschnitte bezogene ermittelte Abstände und ermittelte Werte des Parameters von Fahrzeug zu Fahrzeug weitergeleitet werden, bis das Endfahrzeug des letzten Abschnitts erreicht ist, um die Fahrzeit der Fahrstrecke auf der Basis der ermittelten Abstände und der ermittelten Werte des Parameters der Mehrzahl von Abschnitten abzuschätzen.

3.  Verfahren gemäß Anspruch 1 oder 2, durch die Schritte **gekennzeichnet**:

- Erzeugen einer Anfrage, um die Fahrzeit durch eine sich an dem anfragenden Fahrzeug befindlichen Anfrageerzeugungsmittel abzuschätzen und
- Absenden der erzeugten Anfrage von dem anfragenden Fahrzeug an das Startfahrzeug des Abschnitts, der den Fahrtstartpunkt als Abschnittsstartpunkt hat.

4.  Verfahren gemäß Anspruch 1, 2 oder 3, **dadurch gekennzeichnet, dass** der Schritt zur Bestimmung einer Position (502) des Startfahrzeugs des Abschnitts und das Endfahrzeug des Abschnitts für jeden Abschnitt die Schritte umfasst:

- Bestimmen einer Position (502) des Startfahrzeugs des Abschnitts durch ein sich an dem Startfahrzeug des Abschnitts befindliches Positionierungsmittel und
- Bestimmen einer Position (502) des Endfahrzeugs des Abschnitts durch ein sich an dem Endfahrzeug des Abschnitts befindliches Positionierungsmittel.

5.  Verfahren gemäß Anspruch 4, **gekennzeichnet durch** den weiteren Schritt des Übermittelns von Positionsdaten, die die ermittelte Position des Startfahrzeugs des Abschnitts spezifizieren von dem Startfahrzeug des Abschnitts an das Endfahrzeug des Abschnitts und/oder Übermitteln von Positionsdaten, die die ermittelte Position des Endfahrzeugs des Abschnitts spezifizieren von dem Endfahrzeug des Abschnitts zu dem Startfahrzeug des Abschnitts.

6.  Verfahren gemäß Anspruch 5, **dadurch gekennzeichnet, dass** der Abstand zwischen dem Startfahrzeug des Abschnitts und dem Endfahrzeug des Abschnitts durch ein sich am Fahrzeug des Abschnitts befindliches Abstandsbestimmungsmittel, das die übertragenen Positionsdaten empfing, ermittelt wird.

7.  Verfahren gemäß zumindest einem der vorangegangenen Ansprüche, **dadurch gekennzeichnet, dass** der auf das Startfahrzeug eines Abschnitts und/oder Endfahrzeug eines Abschnitts bezogene Wert des Parameters durch ein sich am Startfahrzeug des Abschnitts oder Endfahrzeug des Abschnitts befindliches Parameterwertbestimmungsmittel ermittelt wird.

8.  Verfahren gemäß Anspruch 7, **gekennzeichnet durch** den Schritt des Übermittelns von Daten, die den ermittelten Wert des Parameters von dem Startfahrzeug des Abschnitts an das Endfahrzeug des Abschnitts spezifizieren und/oder des Übermittelns von Daten, die den ermittelten Wert des Parameters von dem Endfahrzeug des Abschnitts an das Startfahrzeug des Abschnitts spezifizieren.

9. Verfahren gemäß Anspruch 1, **dadurch gekennzeichnet, dass** eine Fahrzeit eines Abschnitts (1002) durch ein sich an dem Startfahrzeug des Abschnitts oder an dem Endfahrzeug des Abschnitts befindliches Abschnittsfahrzeitabschätzungsmittel geschätzt wird.

10. Verfahren gemäß Anspruch 3, wenn abhängig von Anspruch 1, **gekennzeichnet durch** den Schritt des Übermittelns der geschätzten Fahrzeit (1010) an das anfragende Fahrzeug.

11. Verfahren gemäß zumindest einem der vorangegangenen Ansprüche, **dadurch gekennzeichnet, dass** der auf das Startfahrzeug eines Abschnitts und/oder Endfahrzeug eines Abschnitts bezogene Wert des Parameters abhängig ist von der Geschwindigkeit des Startfahrzeugs und/oder des Endfahrzeugs des Abschnitts.

12. Verfahren gemäß zumindest einem der Ansprüche 1 bis 10, **dadurch gekennzeichnet, dass** der auf das Startfahrzeug eines Abschnitts und/oder Endfahrzeug eines Abschnitts bezogene Wert des Parameters abhängig ist von der Fahrzeit, die das Endfahrzeug von dem Abschnitt für das Fahren des Abstands zwischen dem Startfahrzeug des Abschnitts und dem Endfahrzeug des Abschnitts benötigte.

13. Verfahren gemäß zumindest einem der vorangegangenen Ansprüche, **dadurch gekennzeichnet, dass** die Fahrzeit abhängig von vorangegangenen Daten mit vorangegangenen Parameterwerten eines Abschnitts geschätzt wird.

14. Verfahren gemäß Anspruch 3, wenn abhängig von Anspruch 1, **gekennzeichnet durch** den Schritt des Weiterleitens der Anfrage um eine Fahrzeit von dem anfragenden Fahrzeug (4A) an das Fahrzeug (4D), das sich auf der Fahrstrecke innerhalb eines vorbestimmten Abstands zu dem Fahrtstartpunkt befindet, zu schätzen.

15. Verfahren gemäß Anspruch 14, **dadurch gekennzeichnet, dass** an dem Fahrzeug, das sich auf der Fahrstrecke innerhalb eines vorbestimmten Abstands zu dem Fahrtstartpunkt befindet, die Schritte ausgeführt werden:

    - Bestimmen, ob das Fahrzeug schon eine Meldung (507) empfangen hat, die angibt, dass das Fahrzeug, das die Meldung sendet, einen Zeitvorhersagevorgang beginnt,
    - Ignorieren der Anfrage (510), ob eine Meldung empfangen worden ist und
    - Bestimmen, dass das Fahrzeug das Startfahrzeug von dem ersten Abschnitt ist und Übertragen einer Meldung (508), wenn eine Meldung von dem Fahrzeug nicht empfangen worden ist.

16. On-board-Vorrichtung (1201) zum Abschätzen einer Fahrzeit einer Fahrstrecke, wobei die Vorrichtung eingerichtet ist, um an einem ersten Fahrzeug angebracht zu werden und ferner eingerichtet ist, um mit zumindest einem anderen Fahrzeug, das auf der Fahrstrecke fährt, zu kommunizieren, wobei die Vorrichtung umfasst:

    - Fahrstreckenbestimmungsmittel (1202) zum Bestimmen einer Fahrstrecke mit einem Fahrtstartpunkt (404) und einem Fahrtendpunkt (407),
    - Anfrageerzeugungsmittel (1203) zum Erzeugen einer Anfrage um Daten zu empfangen, die von Abständen zwischen Fahrzeugen, die auf der Strecke fahren, abhängig sind und/oder abhängig sind von Parameterwerten bezüglich der Fahrzeuge, die auf der Strecke fahren.
    - Anfragesendemittel (1204) zum Senden der erzeugten Anfrage von der Vorrichtung zu einem anderen Fahrzeug,
    - Datenempfangsmittel (1207) zum Empfangen der angefragten Daten, die von einem anderen Fahrzeug zu der Vorrichtung gesendet wurden in Erwiderung auf die Anfrage,
    - Positionierungsmittel (1208) zum Bestimmen einer Position von dem ersten Fahrzeug,
    - Positionsdatenempfangsmittel (1210) zum Empfangen von Positionsdaten, die die Position eines anderen Fahrzeugs spezifizieren,
    - Abstandsbestimmungsmittel (1211) zum Bestimmen eines Abstands zwischen der Position von dem durch das Positionierungsmittel (1208) ermittelten ersten Fahrzeug und der Position von dem durch das Positionsdatenempfangsmittel (1210) empfangenen anderen Fahrzeug,
    - Parameterwertbestimmungsmittel (1212) zum Bestimmen eines auf das erste Fahrzeug und/oder anderen Fahrzeug bezogenen Werts eines Parameters,
    - Datenerzeugungsmittel (1216) zum Erzeugen von Daten in Abhängigkeit von dem durch das Abstandsbestimmungsmittel (1211) ermittelten Abstand und/oder von dem durch das Parameterwertbestimmungsmittel (1212) ermittelten Parameterwert und

- Fahrzeitschätzungsmittel (1217) zum Abschätzen einer Fahrzeit zum Fahren der Fahrstrecke basierend auf den empfangenen Daten
und
- Datensendemittel (1205) zum Senden der von dem Datenerzeugungsmittel (1216) erzeugten Daten von der Vorrichtung zu einem anderen Fahrzeug,

**dadurch gekennzeichnet, dass**
die Vorrichtung (1201) eingerichtet ist, um eine Fahrzeit der Fahrstrecke gemäß eines Verfahrens gemäß zumindest einem der Ansprüche 1 und 3 bis 15 abzuschätzen, wenn das erste Fahrzeug, an das die Vorrichtung befestigt ist, das Endfahrzeug von dem letzten Abschnitt der Mehrzahl von Abschnitten ist, der den Fahrtendpunkt als Abschnittsendpunkt hat.
wobei das Fahrzeitabschätzungsmittel (1217) konfiguriert ist, um die Fahrzeit der Fahrstrecke auf Basis der ermittelten Abschnittsfahrzeiten von der Mehrzahl von Abschnitten abzuschätzen, in die die besagte Fahrstrecke unterteilt ist, wobei die abgeschätzten Abschnittsfahrzeiten von vorherigen Abschnitten durch das Datenempfangsmittel (1207) von einem anderen Fahrzeug empfangen werden, das sich in einer umgekehrten Richtung zur Vorwärtsfahrtrichtung des ersten Fahrzeugs befindet und zum Abschätzen der Fahrzeit der Fahrstrecke auf Basis der ermittelten Abschnittsfahrzeiten der Mehrzahl von Abschnitten kombiniert wird.

17. On-board-Vorrichtung (1201) zum Abschätzen einer Fahrzeit einer Fahrstrecke, wobei die Vorrichtung eingerichtet ist, um an einem ersten Fahrzeug angebracht zu werden und ferner eingerichtet ist, um mit zumindest einem anderen Fahrzeug, das auf der Fahrstrecke fährt, zu kommunizieren, wobei die Vorrichtung umfasst:

- Fahrstreckenbestimmungsmittel (1202) zum Bestimmen einer Fahrstrecke mit einem Fahrtstartpunkt (404) und einem Fahrtendpunkt (407),
- Anfrageerzeugungsmittel (1203) zum Erzeugen einer Anfrage, um Daten zu empfangen, die von Abständen zwischen Fahrzeugen, die auf der Strecke fahren, abhängen und/oder von Parameterwerten, die auf die Fahrzeuge bezogen sind, die auf der Strecke fahren, abhängen,
- Anfragesendemittel (1204) zum Senden der erzeugten Anfrage von der Vorrichtung zu einem anderen Fahrzeug,
- Datenempfangsmittel (1207) zum Empfangen der angefragten Daten, die von einem anderen Fahrzeug zu der Vorrichtung gesendet wurden in Erwiderung auf die Anfrage,
- Positionierungsmittel (1208) zum Bestimmen einer Position von dem ersten Fahrzeug,
- Positionsdatenempfangsmittel (1210) zum Empfangen von Positionsdaten, die die Position eines anderen Fahrzeugs spezifizieren,
- Abstandsbestimmungsmittel (1211) zum Bestimmen eines Abstands zwischen der Position des durch das Positionierungsmittel (1208) ermittelten ersten Fahrzeugs und der Position des durch das Positionsdatenempfangsmittel (1210) empfangenen anderen Fahrzeugs,
- Parameterwertbestimmungsmittel (1212) zum Bestimmen eines auf das erste Fahrzeug und/oder andere Fahrzeug bezogenen Wertes eines Parameters,
- Datenerzeugungsmittel (1216) zum Erzeugen von Daten in Abhängigkeit von dem durch das Abstandsbestimmungsmittel (1211) ermittelten Abstand und/oder von dem durch das Parameterwertbestimmungsmittel (1212) ermittelten Parameterwert und
- Fahrzeitabschätzungsmittel (1217) zum Abschätzen einer Fahrzeit zum Fahren der Fahrstrecke basierend auf den empfangenen Daten
und
- Datensendemittel (1205) zum Senden der von dem Datenerzeugungsmittel (1216) erzeugten Daten von der Vorrichtung zu einem anderen Fahrzeug,

**dadurch gekennzeichnet, dass**
die Vorrichtung (1201) eingerichtet ist, um eine Fahrzeit von der Fahrstrecke gemäß eines Verfahrens gemäß zumindest einem der Ansprüche 2 bis 8, 11 bis 13 und 15 abzuschätzen, wenn das erste Fahrzeug, an das die Vorrichtung befestigt ist, das Endfahrzeug von dem letzten Abschnitt der Mehrzahl von Abschnitten, der den Fahrtendpunkt als Abschnittsendpunkt hat, ist,
wobei das Fahrzeitabschätzungsmittel (1217) konfiguriert ist, um die Fahrzeit der Fahrstrecke auf Basis der ermittelten Abstände und der ermittelten Werte des Parameters der Mehrzahl von Abschnitten abzuschätzen, in die die Fahrstrecke unterteilt ist, wobei die ermittelten Abstände und die ermittelten Werte des Parameters von vorherigen Abschnitten durch das Datenempfangsmittel (1207) von einem anderen Fahrzeug empfangen werden, das sich in einer umgekehrten Richtung zur Vorwärtsfahrrichtung des ersten Fahrzeugs befindet und kombiniert werden zum Abschätzen der Fahrzeit der Fahrstrecke auf Basis der ermittelten Abschnittsfahrzeiten der Mehrzahl von Abschnitten.

18. On-board-Vorrichtung gemäß Anspruch 16 oder 17, **gekennzeichnet durch** ein Anfrageempfangsmittel (1206), um die Anfrage zu empfangen.

19. On-board-Vorrichtung gemäß Anspruch 16, 17 oder 18, **gekennzeichnet durch** ein Positionierungsdatensendemittel (1209) zum Senden von Positionsdaten, die die **durch** das Positionierungsmittel ermittelte Position des ersten Fahrzeugs zu einem anderen Fahrzeug spezifizieren.

20. Fahrzeug mit einer on-board-Vorrichtung gemäß zumindest einem der Ansprüche 16 bis 19.

21. Ein Computerprogrammprodukt zum Abschätzen einer Fahrzeit, wobei das Computerprogrammprodukt ein Computer-lesbares Medium und ein darin in Form von einer Serie von Zustandselementen aufgezeichnetes Computerprogramm umfasst gemäß Instruktionen, die eingerichtet sind, um durch ein Datenverarbeitungsmittel von einer Datenverarbeitungsvorrichtung verarbeitet zu werden, derart, dass ein Verfahren gemäß zumindest einer der Ansprüche 1 bis 15 ausgeführt wird.

**Revendications**

1. Procédé pour estimer un temps de trajet d'un itinéraire de route, comportant les étapes consistant à :

   - déterminer un itinéraire de route ayant un point de départ de trajet (404) et un point de fin de trajet (407), et
   - subdiviser l'itinéraire de route en une pluralité de sections, chaque section ayant un point de départ de section étant représenté par une position d'un véhicule au départ de la section se déplaçant sur ledit itinéraire de route dans une direction de conduite vers l'avant et un point de fin de section étant représenté par une position d'un véhicule à la fin de la section se déplaçant sur ledit itinéraire de route dans la direction de conduite vers l'avant, dans lequel le véhicule à la fin d'une première section est le véhicule au départ d'une seconde section qui suit la première section dans la direction de conduite vers l'avant,

   le procédé comportant en outre pour chaque section parmi la pluralité de sections les étapes consistant à :

   - déterminer une position (502) du véhicule au départ de la section et une position du véhicule à la fin de la section,
   - déterminer une distance entre le véhicule au départ de la section et le véhicule à la fin de la section sur la base des positions déterminées,
   - déterminer une valeur d'un paramètre concernant le véhicule au départ de la section et/ou le véhicule à la fin de la section, et
   - déterminer un temps de trajet de section de la section sur la base de la distance déterminée et de la valeur déterminée du paramètre,
   **caractérisé par** l'étape consistant à
   - estimer le temps de trajet de l'itinéraire de route au niveau du véhicule à la fin de la dernière section parmi la pluralité de sections lequel a le point de fin de trajet en tant que point de fin de section, dans lequel le temps de trajet de section déterminé d'une section et également les temps de trajet de sections estimés de sections précédentes sont envoyés à un véhicule d'une section qui suit la section pour laquelle ledit temps de trajet de section a été déterminé dans la direction de conduite vers l'avant de sorte que des temps de trajet estimés concernant la pluralité de sections sont envoyés de véhicule à véhicule jusqu'à ce que le véhicule à la fin de la dernière section soit atteint de manière à combiner les temps de trajet estimés afin d'estimer le temps de trajet de l'itinéraire de route sur la base des temps de trajet de sections déterminés de la pluralité de sections.

2. Procédé pour estimer un temps de trajet d'un itinéraire de route, comportant les étapes consistant à :

   - déterminer un itinéraire de route ayant un point de départ de trajet (404) et un point de fin de trajet (407), et
   - subdiviser l'itinéraire de route en une pluralité de sections, chaque section ayant un point de départ de section étant représenté par une position d'un véhicule au départ de la section se déplaçant sur ledit itinéraire de route dans une direction de conduite vers l'avant et un point de fin de section étant représenté par une position d'un véhicule à la fin de la section se déplaçant sur ledit itinéraire de route dans la direction de conduite vers l'avant, dans lequel le véhicule à la fin d'une première section est le véhicule au départ d'une seconde section qui suit la première section dans la direction de conduite vers l'avant,

le procédé comportant en outre pour chaque section parmi la pluralité de sections les étapes consistant à :

- déterminer une position (502) du véhicule au départ de la section et une position du véhicule à la fin de la section,
- déterminer une distance entre le véhicule au départ de la section et le véhicule à la fin de la section sur la base des positions déterminées, et
- déterminer une valeur d'un paramètre concernant le véhicule au départ de la section et/ou le véhicule à la fin de la section,

**caractérisé par** l'étape consistant à

- estimer le temps de trajet de l'itinéraire de route au niveau du véhicule à la fin de la dernière section parmi la pluralité de sections lequel a le point de fin de trajet en tant que point de fin de section, dans lequel la distance déterminée d'une section et les valeurs déterminées du paramètre d'une section et également les distances déterminées et les valeurs déterminées du paramètre de sections précédentes sont envoyées à un véhicule d'une section qui suit la section pour laquelle ladite distance et ladite valeur dudit paramètre ont été déterminées dans la direction de conduite vers l'avant de sorte que des distances déterminées et des valeurs déterminées du paramètre concernant la pluralité de sections sont envoyées de véhicule à véhicule jusqu'à ce que véhicule à la fin de la dernière section soit atteint de manière à estimer le temps de trajet de l'itinéraire de route sur la base des distances déterminées et des valeurs déterminées du paramètre de la pluralité de sections.

3. Procédé selon la revendication 1 ou 2, **caractérisé par** les étapes consistant à :

- générer une demande pour estimer un temps de trajet par l'intermédiaire de moyens de génération de demande agencés sur un véhicule demandeur, et
- envoyer la demande générée du véhicule demandeur au véhicule au départ de la section qui a le point de départ de trajet en tant que point de départ de section.

4. Procédé selon la revendication 1, 2 ou 3, **caractérisé en ce que** l'étape consistant à déterminer une position (502) du véhicule au départ de la section et du véhicule à la fin de la section pour chaque section comporte les étapes consistant à :

- déterminer une position (502) du véhicule au départ de la section par l'intermédiaire de moyens de positionnement agencés sur le véhicule au départ de la section, et
- déterminer une position (502) du véhicule à la fin de la section par l'intermédiaire de moyens de positionnement agencés sur le véhicule à la fin de la section.

5. Procédé selon la revendication 4, **caractérisé par** l'étape supplémentaire consistant à transmettre des données de position spécifiant la position déterminée du véhicule au départ de la section à partir du véhicule au départ de la section jusqu'au véhicule à la fin de la section et/ou à transmettre des données de position spécifiant la position déterminée du véhicule à la fin de la section à partir du véhicule à la fin de la section jusqu'au véhicule au départ de la section.

6. Procédé selon la revendication 5, **caractérisé en ce que** la distance entre le véhicule au départ de la section et le véhicule la fin de la section est déterminée par des moyens de détermination de distance agencés sur le véhicule de la section qui a reçu les données de position transmises.

7. Procédé selon au moins l'une des revendications précédentes, **caractérisé en ce que** la valeur du paramètre concernant le véhicule au départ d'une section et/ou le véhicule à la fin d'une section est déterminée par des moyens de détermination de valeur de paramètre agencés sur le véhicule au départ de la section ou le véhicule à la fin de la section.

8. Procédé selon la revendication 7, **caractérisé par** l'étape consistant à transmettre des données spécifiant la valeur déterminée du paramètre à partir du véhicule au départ de la section jusqu'au véhicule à la fin de la section et/ou à transmettre des données spécifiant la valeur déterminée du paramètre à partir du véhicule à la fin de la section jusqu'au véhicule au départ de la section.

9. Procédé selon la revendication 1, **caractérisé en ce que** un temps de trajet pour une section (1002) est estimé par des moyens d'estimation de temps de trajet de section étant agencés sur le véhicule au départ de la section ou le véhicule la fin de la section.

10. Procédé selon la revendication 3 lorsqu'elle dépend de la revendication 1, **caractérisé par** l'étape consistant à transmettre le temps de trajet estimé (1010) au véhicule demandeur.

11. Procédé selon au moins l'une des revendications précédentes, **caractérisé en ce que** la valeur du paramètre concernant le véhicule au départ d'une section et/ou le véhicule à la fin d'une section dépend de la vitesse du véhicule au départ de ladite section et/ou du véhicule à la fin de ladite section.

12. Procédé selon au moins l'une des revendications 1 à 10, **caractérisé en ce que** la valeur du paramètre concernant le véhicule au départ d'une section et/ou le véhicule à la fin d'une section dépend du temps de trajet nécessaire au véhicule à la fin de ladite section pour effectuer la distance entre le véhicule au départ de ladite section et le véhicule à la fin de ladite section.

13. Procédé selon au moins l'une des revendications précédentes, **caractérisé en ce que** le temps de trajet est estimé en fonction de données d'historique comportant des valeurs de paramètres d'historique d'une section.

14. Procédé selon la revendication 3 lorsqu'elle dépend de la revendication 1, **caractérisé par** l'étape consistant à envoyer la demande pour estimer un temps de trajet depuis le véhicule demandeur (4A) jusqu'à un véhicule (4D) qui est localisé sur l'itinéraire de route dans une distance prédéterminée par rapport au point de départ de trajet.

15. Procédé selon la revendication 14, **caractérisé en ce que**, sur le véhicule qui est localisé sur l'itinéraire de route dans une distance prédéterminée par rapport au point de départ de trajet, les étapes consistant à :

    - déterminer si ledit véhicule a déjà reçu une déclaration (507) déclarant que le véhicule envoyant la déclaration va lancer un processus de prévision de durée,
    - ignorer la demande (510), si une déclaration a été reçue, et
    - déterminer que ledit véhicule est le véhicule au départ de la première section et diffuser une déclaration (508), si une déclaration n'a pas été reçue par ledit véhicule, sont exécutées.

16. Dispositif embarqué (1201) pour estimer un temps de trajet d'un itinéraire de route, ledit dispositif étant adapté pour être monté sur un premier véhicule et étant en outre adapté pour communiquer avec au moins un autre véhicule se déplaçant sur ledit itinéraire de route, ledit dispositif comportant :

    - des moyens de détermination d'itinéraire de route (1202) pour déterminer un itinéraire de route ayant un point de départ de trajet (404) et un point de fin de trajet (407),
    - des moyens de génération de demande (1203) pour générer une demande afin de recevoir des données étant fonction des distances entre des véhicules se déplaçant sur ledit trajet et/ou étant fonction de valeurs de paramètre concernant lesdits véhicules se déplaçant sur ledit itinéraire de route,
    - des moyens d'envoi de demande (1204) pour envoyer la demande générée du dispositif à un autre véhicule,
    - des moyens de réception de données (1207) pour recevoir les données demandées envoyées par un autre véhicule dans ledit dispositif en réponse à la demande,
    - des moyens de positionnement (1208) pour déterminer une position du premier véhicule,
    - des moyens de réception de données de position (1210) pour recevoir des données de position spécifiant une position d'un autre véhicule,
    - des moyens de détermination de distance (1211) pour déterminer une distance entre ladite position du premier véhicule déterminée par les moyens de positionnement (1208) et ladite position de l'autre véhicule reçue par les moyens de réception de données de position (1210),
    - des moyens de détermination de valeur de paramètre (1212) pour déterminer une valeur d'un paramètre concernant le premier véhicule et/ou l'autre véhicule,
    - des moyens de génération de données (1216) pour générer des données en fonction de la distance déterminée par les moyens de détermination de distance (1211) et/ou en fonction de la valeur de paramètre déterminée par les moyens de détermination de valeur de paramètres (1212), et
    - des moyens d'estimation de temps de trajet (1217) pour estimer un temps de trajet pour effectuer l'itinéraire de route sur la base des données reçues, et
    - des moyens d'envoi de données (1205) pour envoyer les données générées par les moyens de génération de données (1216) depuis le dispositif à un autre véhicule,

**caractérisé en ce que**

ledit dispositif (1201) est adapté pour estimer un temps de trajet de l'itinéraire de route conformément à un procédé selon au moins l'une des revendications 1 et 3 à 15, dans lequel ledit premier véhicule dans lequel ledit dispositif est monté est le véhicule de fin de la dernière section parmi la pluralité de sections lequel a le point de fin de trajet en tant que point de fin de section,

dans lequel lesdits moyens d'estimation de temps de trajet (1217) sont configurés pour estimer le temps de trajet de l'itinéraire de route sur la base des temps de trajet de sections déterminés de la pluralité de sections en lesquelles ledit itinéraire de route est divisé, les temps de trajet de sections estimés de sections précédentes étant reçus par les moyens de réception de données (1207) en provenance d'un autre véhicule, lequel est localisé dans une direction opposée à la direction de conduite vers l'avant du premier véhicule, et étant combinés pour estimer le temps de trajet de l'itinéraire de route sur la base des temps de trajet de sections déterminés de la pluralité de sections.

17. Dispositif embarqué (1201) pour estimer un temps de trajet d'un itinéraire de route, ledit dispositif étant adapté pour être monté sur un premier véhicule et étant en outre adapté pour communiquer avec au moins un autre véhicule se déplaçant sur ledit itinéraire de route, ledit dispositif comportant :

- des moyens de détermination d'itinéraire de route (1202) pour déterminer un itinéraire de route ayant un point de départ de trajet (404) et un point de fin de trajet (407),
- des moyens de génération de demande (1203) pour générer une demande afin de recevoir des données étant fonction des distances entre des véhicules se déplaçant sur ledit trajet et/ou étant fonction de valeurs de paramètre concernant lesdits véhicules se déplaçant sur ledit trajet,
- des moyens d'envoi de demande (1204) pour envoyer la demande générée du dispositif à un autre véhicule,
- des moyens de réception de données (1207) pour recevoir les données demandées envoyées par un autre véhicule dans ledit dispositif en réponse à la demande,
- des moyens de positionnement (1208) pour déterminer une position du premier véhicule,
- des moyens de réception de données de position (1210) pour recevoir des données de position spécifiant une position d'un autre véhicule,
- des moyens de détermination de distance (1211) pour déterminer une distance entre ladite position du premier véhicule déterminée par les moyens de positionnement (1208) et ladite position de l'autre véhicule reçue par les moyens de réception de données de position (1210),
- des moyens de détermination de valeur de paramètre (1212) pour déterminer une valeur d'un paramètre concernant le premier véhicule et/ou l'autre véhicule,
- des moyens de génération de données (1216) pour générer des données en fonction de la distance déterminée par les moyens de détermination de distance (1211) et/ou en fonction de la valeur de paramètre déterminée par les moyens de détermination de valeur de paramètres (1212), et
- des moyens d'estimation de temps de trajet (1217) pour estimer un temps de trajet pour effectuer l'itinéraire de route sur la base des données reçues, et
- des moyens d'envoi de données (1205) pour envoyer les données générées par les moyens de génération de données (1216) depuis le dispositif à un autre véhicule,

**caractérisé en ce que**

ledit dispositif (1201) est adapté pour estimer un temps de trajet de l'itinéraire de route conformément à un procédé selon au moins l'une des revendications 2 à 8, 11 à 13 et 15, dans lequel ledit premier véhicule dans lequel ledit dispositif est monté est le véhicule de fin de la dernière section parmi la pluralité de sections lequel a le point de fin de trajet en tant que point de fin de section,

lesdits moyens d'estimation de temps de trajet (1217) étant configurés pour estimer le temps de trajet de l'itinéraire de route sur la base des distances déterminées et des valeurs déterminées du paramètre de la pluralité de sections en lesquelles ledit itinéraire de route est divisé, les distances déterminées et les valeurs déterminées du paramètre de sections précédentes étant reçues par les moyens de réception de données (1207) en provenance d'un autre véhicule, lequel est localisé dans une direction opposée à la direction de conduite vers l'avant du premier véhicule, et étant combinées pour estimer le temps de trajet de l'itinéraire de route sur la base des temps de trajet de sections déterminés de la pluralité de sections.

18. Dispositif embarqué selon la revendication 16 ou 17, **caractérisé par** des moyens de réception de demande (1206) pour recevoir ladite demande.

19. Dispositif embarqué selon la revendication 16, 17 ou 18, **caractérisé par** des moyens d'envoi de données de position (1209) pour envoyer des données de position spécifiant la position du premier véhicule déterminée par les moyens de positionnement à un autre véhicule.

20. Véhicule comportant un dispositif embarqué selon au moins l'une des revendications 16 à 19.

21. Produit de programme informatique pour estimer un temps de trajet, le produit de programme informatique comportant un support lisible par ordinateur et un programme informatique enregistré dans celui-ci sous la forme d'une série d'éléments d'état correspondant à des instructions qui sont adaptées pour être traitées par des moyens de traitement de données et un dispositif de traitement de données de sorte qu'un procédé conformément à au moins l'une des revendications 1 à 15 est mis en oeuvre.

# FIG 1

# FIG 2

```
              ○
              │
    ┌─────────────────┐
    │  positioning    │
    │    message      │── 201
    │    received     │
    └─────────────────┘
              │
    ┌─────────────────┐
    │ store in memory │── 202
    └─────────────────┘
              │
   203        ▽
        ╱─────────────╲          Y      ┌──────────────────┐
       ╱  GPS data of  ╲─────────────────│ Discard expired  │── 204
       ╲ host vehicle? ╱                 │ messages in self-│
        ╲─────────────╱                  │ historical data  │
              │ N                        │     table        │
   207    206 │                          └──────────────────┘
    ┌────────┐   ╱────────╲   N                   │
    │Discard │ ◄─╱  same   ╲◄──────         ┌──────────────────┐
    │message │   ╲direction?╱               │ update self-     │
    └────────┘    ╲────────╱                │ historical data  │
              ▲        │ Y                  │  table with      │
              │        ▼                    │  received data   │
              │  ┌──────────────────┐       └──────────────────┘
              │  │ discard expired  │            205
              │208│messages in beaconing│
              │  │ historical data table│
              │  └──────────────────┘
              │        │
              │  ┌──────────────────┐
              │  │update beaconing  │
              │  │historical data   │── 209
              │  │table with        │
              │  │received data     │
              │  └──────────────────┘
```

# FIG 3

| Type | Vehicle ID | Time stamp | Speed [m/s] | Direction (degree) | Position (degree, degree, m) | Time to expire |
|------|-----------|------------|-------------|--------------------|------------------------------|----------------|
| 300 | 301 | 302 | 303 | 304 | 305 | 306 |
| X | B | Hh:mm:ss | X | X | Xxxx.xxx N Xxxx.xxx E X | Hh:mm:ss |
| X | B | Hh:mm:ss | X | X | Xxxx.xxx N Xxxx.xxx E X | Hh:mm:ss |
| X | C | Hh:mm:ss | X | X | Xxxx.xxx N Xxxx.xxx E X | Hh:mm:ss |
| X | E | Hh:mm:ss | X | X | Xxxx.xxx N Xxxx.xxx E X | Hh:mm:ss |
| ... | ... | ... | ... | ... | ... | ... |

EP 1 959 414 B1

FIG 4

401

406

4E

4F

declaration

405

travel
end
point

407

408

402

request

4C

request

4A

request

4B

402

402

403

409

travel
start
point

4D

404

EP 1 959 414 B1

# FIG 5

forward the request message ~505

Check current position ~502

Request message received

501

In the downstream of sending vehicle? 503 — N

Y

Within predetermined distance to travel start point? 504 — N

Y

in the same driving direction? 506 — N

Y

Declaration message received? 507 — Y

N

Broadcast declaration message ~508

start prediction process ~509

Discard the request message ~510

## FIG 6

| 601 | 602 | 603 | 604 | 605 | 606 | 607 | 608 | 609 | 610 |
|---|---|---|---|---|---|---|---|---|---|
| Type | Request ID | Vehicle ID | Time stamp | Position | Travel start point | Travel end point | Segment ID | Segment end point | Number of remaining segments |
| x | xxx | xxx | hh.mm.ss | xxxx.xxx, N xxxx.xxx E x | xxxx.xxx N xxxx.xxx E x | xxxx.xxx N xxxx.xxx E x | x | xxxx.xxx N xxxx.xxx E x | x |

## FIG 7

| 701 | 702 | 703 | 704 | 705 | 706 |
|---|---|---|---|---|---|
| Type | Request ID | Req. Veh. ID | Vehicle ID | Time stamp | Position |
| x | xxx | xxx | xxx | Hh.mm.ss | xxxx.xxx N xxxx.xxx E x |

EP 1 959 414 B1

EP 1 959 414 B1

## FIG 8

relay vehicle i.n =
relay vehicle
1.n+1

801

802

Prediction

Travel time

relay
vehicle
2.n+1

801

Prediction

relay
vehicle 1.n

segment
end
point n

Prediction

relay
vehicle 2.n

801

segment end
point n-1

## FIG 9

| Type | Request message | Sending vehicle ID | Sending vehicle position | Receiving vehicle ID | Receiving vehicle position | Travel time [s] | Status [0 or 1] | current segment ID |
|------|------|------|------|------|------|------|------|------|
| 901 | 902 | 903 | 904 | 905 | 906 | 907 | 908 | 909 |
| X | xxx | xxx | xxxx.xxx, N xxxx.xxx E x | xxx | xxxx.xxx N xxxx.xxx E x | xxx | x | xxx |

## FIG 10

1009

Forward the prediction
message

1002

Calculate T

1001

1003

anymore relay vehicle in
current segment?    N

Y

set status
flag to 1    1005

1004

set status
flag to 0

determine the next
relay vehicle    1006

1012

generate new
prediction
message

update
the prediction message

1007

1    1008

status flag?

0

Generate a travel
time message    1010

1011

Y    any more segment?

N

END    1013

FIG 11

| Type | Vehicle ID | Time | Position | Request ID | Requesting vehicle ID | Request position | Segment ID | Number of participating vehicles | Travel time [s] |
|---|---|---|---|---|---|---|---|---|---|
| 1101 | 1102 | 1103 | 1104 | 1105 | 1106 | 1107 | 1108 | 1109 | 1110 |
| xxx | xxx | hh:mm:ss | xxxx.xxx, N xxxx.xxx E x | xxx | xxx | xxxx.xxx N xxxx.xxx E x | xxx | xxx | xxx |

EP 1 959 414 B1

FIG 12

travel route
determination
means ~1202

1203~ request
generation means

declaration
management means ~1219

1201~

1204~ request
sending means

request
receiving means ~1206

~1207 data
receiving
means

travel time
estimation means ~1217

1212

1220~ travel time
announcement
sending means

data
sending
means

travel time
announcement
receiving means ~1221

parameter value
determination means

1213 1214

1205~

position data
sending
means ~1209

position data
receiving
means ~1210

velocity
determination
means

travel time
determination
means

1208~ positioning
means

distance
determination
means ~1211

1218~ proximity
detection
means

data generation means

~1216

1215

first data
storage

EP 1 959 414 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1484729 B1
- WO 03060429 A1

**Non-patent literature cited in the description**

- Short-Term Travel Time Prediction Using a Time-varying Coefficient Linear Model. **XIAOYAN ZHANG ; JOHN A.** Rice from the University of Berkeley. Elsevier Preprint, 13 March 2001